(19) Europäisches Patentamt
European Patent Office
Office européen des brevets

(11) **EP 4 458 548 A1**

(12) **EUROPÄISCHE PATENTANMELDUNG**

(43) Veröffentlichungstag:
**06.11.2024   Patentblatt 2024/45**

(21) Anmeldenummer: **23171688.7**

(22) Anmeldetag: **04.05.2023**

(51) Internationale Patentklassifikation (IPC):
**B29C 48/40** (2019.01)     **B29C 48/405** (2019.01)
**B29C 48/25** (2019.01)     B29B 7/48 (2006.01)

(52) Gemeinsame Patentklassifikation (CPC):
**B29C 48/402; B29C 48/2517; B29C 48/405;
B29C 48/54; B29C 48/55; B29C 48/57;
B29C 48/655;** B29B 7/489; B29C 48/2715

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG
51373 Leverkusen (DE)**

(72) Erfinder:
• **KOENIG, Thomas
  51375 Leverkusen (DE)**
• **BIERDEL, Michael
  51373 Leverkusen (DE)**

(74) Vertreter: **Levpat
c/o Covestro AG
Gebäude K12
51365 Leverkusen (DE)**

(54) **SCHNECKENELEMENTE MIT VERBESSERTER MISCHWIRKUNG UND VERBESSERTEM WÄRMEÜBERGANG UND DEREN VERWENDUNG**

(57) Die Erfindung betrifft ein Paar dreigängiger Schneckenelemente für eine mehrwellige Schneckenmaschine mit gleichsinnig und gleichschnell drehenden Schneckenwellen. Dabei reinigen sich die beiden Schneckenelemente des erfindungsgemäßen Paares Schneckenelemente, die unmittelbar benachbart auf zwei unmittelbar benachbarten Schneckenwellen gegenüberliegen, gegenseitig praktisch ab. Die Erfindung betrifft auch die Verwendung des erfindungsgemäßen Paares Schneckenelemente in einer mehrwelligen Schneckenmaschine sowie eine mehrwellige Schneckenmaschine, die mit einem erfindungsgemäßen Paar Schneckenelemente ausgerüstet ist, sowie ein Verfahren zur Extrusion plastischer oder viskoelastischer Massen unter Verwendung des erfindungsgemäßen Paares Schneckenelemente.

Figur 1

**EP 4 458 548 A1**

**Beschreibung**

Die Erfindung betrifft ein Paar dreigängiger Schneckenelemente für eine mehrwellige Schneckenmaschine mit gleichsinnig und gleichschnell drehenden Schneckenwellen. Dabei reinigen sich die beiden Schneckenelemente des erfindungsgemäßen Paares Schneckenelemente, die unmittelbar benachbart auf zwei unmittelbar benachbarten Schneckenwellen gegenüberliegen, gegenseitig praktisch ab. Die Erfindung betrifft auch die Verwendung des erfindungsgemäßen Paares Schneckenelemente in einer mehrwelligen Schneckenmaschine sowie eine mehrwellige Schneckenmaschine, die mit einem erfindungsgemäßen Paar Schneckenelemente ausgerüstet ist, sowie ein Verfahren zur Extrusion plastischer oder viskoelastischer Massen unter Verwendung des erfindungsgemäßen Paares Schneckenelemente.

Im Sinne der vorliegenden Erfindung wird unter einer mehrwelligen Schneckenmaschine eine Schneckenmaschine mit mehr als einer Schneckenwelle verstanden, beispielsweise eine Schneckenmaschine mit zwei, drei oder vier Schneckenwellen oder auch Extruder mit acht bis sechzehn, insbesondere zwölf, ringförmig angeordneten Schneckenwellen. Bei mehr als zwei Schneckenwellen können die Drehachsen der Schneckenwellen nebeneinander oder beispielsweise auch - wie bei einem sogenannten Ringextruder - ringförmig zueinander angeordnet sein. Bei Mehrwellenextrudern sind die Drehachsen der Schneckenwellen in aller Regel parallel zueinander angeordnet. Diese parallele Anordnung der Drehachsen ist auch erfindungsgemäß bevorzugt. Die erfindungsgemäßen Schneckenelemente sind bevorzugt in einer Anzahl, die der Anzahl der Schneckenwellen des jeweiligen Extruders entspricht, auf den Schneckenwellen gegenüberliegend angeordnet. Eine solche Schneckenmaschine mit mehr als einer Schneckenwelle wird nachfolgend auch mehrwellige Schneckenmaschine, Mehrwellenschneckenmaschine oder Mehrwellenextruder genannt. Eine zweiwellige Schneckenmaschine wird nachfolgend auch Doppelschneckenextruder genannt. Im Sinne der vorliegenden Erfindung wird der Begriff "Schneckenmaschine" gleichbedeutend mit dem Begriff "Extruder" gebraucht.

Moderne Extruder verfügen über ein Baukastensystem, bei dem zur Bildung einer Schneckenwelle verschiedene Schneckenelemente auf einer Kernwelle aufgezogen werden können; eine solche Schneckenwelle ist also segmentiert. Hiermit kann der Fachmann den Extruder an die jeweilige Verfahrensaufgabe anpassen. Eine Schneckenwelle kann aber auch aus einem Stück angefertigt sein, also nur ein Schneckenelement aufweisen, das sich im Wesentlichen über die gesamte Länge der Schneckenwelle erstreckt oder nur teilweise segmentiert sein. Die vorliegende Erfindung betrifft sowohl Schneckenelemente, die auf eine Kernwelle aufgezogen werden können, als auch auf die oben beschriebenen aus nur einem Stück gefertigten Schneckenwellen.

Gleichsinnig drehende zweiwellige Schneckenmaschinen, deren Schneckenwellen sich gegenseitig exakt abreinigen, sind bereits seit langem bekannt, z.B. aus der DE 862 668 C. In der Polymerherstellung und -verarbeitung haben Schneckenmaschinen mit Schneckenwellen, deren Schneckenelemente auf dem Prinzip exakt abreinigender Schneckenquerschnittsprofile beruhen, eine vielfältige Nutzung erfahren. Dies beruht vor allem darauf, dass Polymerschmelzen an Oberflächen anhaften und unter üblichen Verarbeitungstemperaturen mit der Zeit degradieren, was durch die selbstreinigende Wirkung von paarweise einander exakt abreinigenden Schneckenelementen in Mehrwellenschneckenmaschinen unterbunden wird. Regeln zur Erzeugung von Schneckenquerschnittsprofilen für einander exakt abreinigende Schneckenelemente sind beispielsweise in [1] ([1] = Klemens Kohlgrüber: "Der gleichläufige Doppelschneckenextruder", 2. Auflage, Hanser Verlag München 2016, Seiten 107 bis 120) dargestellt. Hier wird auch beschrieben, dass bei einander exakt abreinigenden Schneckenelementen ein vorgegebenes Schneckenquerschnittsprofil auf der ersten Welle eines Doppelschneckenextruders das Schneckenquerschnittsprofil auf der zweiten Welle des Doppelschneckenextruders bestimmt ([1], Seite 108). Unter einem Schneckenquerschnittsprofil, im Rahmen dieser Erfindung kurz auch Schneckenprofil genannt, wird dabei die äußere Kontur eines Schneckenelements in einem ebenen Schnitt rechtwinklig zur Drehachse des Schneckenelements, entsprechend der Drehachse der zugehörigen Schneckenwelle, verstanden. Das Schneckenprofil für das Schneckenelement auf der ersten Welle wird als das erzeugende Schneckenprofil bezeichnet. Das Schneckenprofil für das Schneckenelement auf der zweiten Welle folgt aus dem Schneckenprofil der ersten Welle des Doppelschneckenextruders und wird daher als das erzeugte Schneckenprofil bezeichnet. Bei einem Mehrwellenextruder werden das Schneckenelement mit dem erzeugenden Schneckenprofil und das das Schneckenelement mit dem erzeugten Schneckenprofil auf benachbarten Wellen immer abwechselnd eingesetzt.

Ein Fachmann auf dem Gebiet der Schneckenelemente versteht natürlich dabei, dass ein einzelnes Schneckenelement oder Schneckenprofil für sich alleine nicht exakt abschabend oder praktisch abschabend sein kann, sondern dass es dafür immer eines Paares solcher Elemente bedarf.

Hierbei sind zwei Dinge zu unterscheiden: Das exakt abreinigende Schneckenprofil, ein mathematisches Konstrukt, bei dem sich zwei Schneckenelemente, die auf zwei unmittelbar benachbarten Schneckenwellen gegenüberliegen, ohne Spiel einander abreinigen, und Schneckenprofile für in materieller Wirklichkeit zur bestimmungsgemäßen Nutzung, also technisch ausgeführte Schneckenelemente.

Dem Fachmann ist bekannt und beispielsweise in [1], auf den Seiten 39 bis 41 sowie auf den Seiten 113 bis 121 angegeben, dass technisch ausgeführte Schneckenelemente über Spiele - und zwar sowohl Spiele Schneckenelement-Schneckenelement $s$ als auch Spiele Schneckenelement-Gehäusebohrungsinnenwand $\delta$ (im Rahmen der vorliegenden Erfindung Spalt Schneckenelement-Gehäusebohrungsinnenwand $S$ genannt) - verfügen müssen, um die Funktionsfähigkeit des Extruders zu gewährleisten. Dies ist erforderlich, um metallisches "Fressen" zu vermeiden, Fertigungstoleranzen, Rauigkeiten, Winkelabweichungen sowie ungleichmäßige Wärmeausdehnungen und übermäßigen Extrudatstress durch zu geringe Abstände zwischen zwei Schneckenelementen, die sich unmittelbar benachbart auf zwei unmittelbar benachbarten Schneckenwellen gegenüberliegen, zu vermeiden. Auf den genannten Seiten sind auch Methoden erklärt, um aus den Spielen und der exakt abschabenden Kontur die genaue Geometrie des zu fertigenden Elements zu bestimmen. Diese Methoden werden Spielstrategien genannt.

Im Sinne der vorliegenden Erfindung wird unter einem Spiel - im Rahmen der vorliegenden Erfindung auch als mit s bezeichnet - der Abstand zwischen den sich am nächsten liegenden Punkten der Schneckenprofile zweier sich gegenseitig praktisch abreinigender Schneckenelemente verstanden. Die in [1] genannten Regeln zur Erzeugung von Schneckenprofilen mit Spielen sind auf die erfindungsgemäßen Schneckenelemente anwendbar.

Im Sinne der vorliegenden Erfindung wird unter einem Spalt - im Rahmen der vorliegenden Erfindung auch als mit S bezeichnet - der Abstand zwischen einem Kamm eines Schneckenprofils und den sich am nächsten liegenden Punk der Gehäusebohrungsinnenwand eines Extruders verstanden. Die Gehäusebohrungsinnenwand eines Extruders wird nachfolgend auch kurz Gehäuseinnenwand genannt.

Wird im Rahmen der vorliegenden Erfindung der Begriff "exakt abreinigend" gebraucht, so ist - soweit nichts anderes dazu erklärt wird - das mathematische Konstrukt eines exakt abreinigenden Schneckenprofils bzw. des entsprechenden, dieses Schneckenprofil aufweisenden, Schneckenelements gemeint. Wird im Rahmen der vorliegenden Erfindung der Begriff "praktisch abreinigend" gebraucht, so ist - soweit nichts anderes dazu erklärt wird - das technische ausgeführte Schneckenelement bzw. dessen Schneckenprofil, wobei dieses praktisch abreinigende Schneckenprofil von einem exakt abreinigenden Schneckenprofil abgeleitet wurde, bevorzugt durch Anwendung einer der Spielstrategien Achsabstandsvergrößerung, Längsschnittäquidistante, Kreisäquidistante oder Raumäquidistante, besonders bevorzugt durch Anwendung einer der Spielstrategien Längsschnittäquidistante, Kreisäquidistante oder Raumäquidistante, wie weiter unten näher erklärt.

Die Spielstrategien Längsschnittäquidistante, Kreisäquidistante und Raumäquidistante werden nachfolgend auch als Längsschnittäquidistantenrechenvorschrift, Kreisäquidistantenrechenvorschrift und Raumäquidistantenrechenvorschrift bezeichnet.

Mehrwellenextruder, insbesondere Doppelschneckenextruder, tragen bekanntlich durch Dissipation mechanische Energie in ein Extrudat ein. Dies hat erwünschte und unerwünschte Konsequenzen, weil der Energieeintrag einerseits zur Erfüllung von verfahrenstechnischen Aufgaben wie Mischen und Entgasen erforderlich ist und andererseits die eingetragene mechanische Energie verbraucht wird und auch zu Temperaturerhöhungen im Extrudat führt, die zu unerwünschten chemischen Reaktionen führen können, die das Extrudat schädigen.

Auch Mischen ist bekanntlich eine Grundoperation in Mehrwellenextrudern, insbesondere Doppelschneckenextrudern. Inhomogenitäten im Extrudat aufgrund unvollkommener Mischung führen bekanntlich zu Problemen bei der Weiterverarbeitung des Extrudats sowie bei den endgültigen Eigenschaften.

Besonders stark geschert wird das Extrudat in einem Doppelschneckenextruder bekanntlich zwischen einem Schneckenkamm und der Gehäusebohrungsinnenwand eines Extruders. Dort wird also besonders viel Energie in das Extrudat dissipiert, was lokal zu starken Überhitzungen im Extrudat führt. Dies ist beispielsweise in [1] auf den Seiten 416 bis 423, Bilder 4.80 bis 4.84. dargestellt. Diese lokalen Überhitzungen können zu Schädigungen im Extrudat wie z.B. Veränderung in Geruch, Farbe, chemischer Zusammensetzung oder Molekulargewicht oder zur Bildung von Inhomogenitäten im Extrudat wie Gelkörpern oder Stippen führen. Vor allem ein großer Kammwinkel und insbesondere eine große Summe der Kammwinkel eines Paares von Schneckenelementen, die sich auf unmittelbar benachbarten Schneckenwellen gegenüberliegen und dabei gegenseitig abschaben, ist hierbei schädlich.

Schneckenelemente, die eine verbesserte Mischwirkung zum Ziel haben, sind seit langem Gegenstand der technischen Entwicklung. Zahlreiche bekannte Geometrien vernachlässigen dabei, dass sich vorteilhafterweise Schneckenelemente gegenseitig abreinigen sollten, wie zum Beispiel alle Varianten von Zahnmischelementen, beispielsweise DE 4 134 026 A1, DE 19 706 134 A1 oder WO 2004 009 326 A1. Diese Klasse von Mischelementen ist im Wesentlichen dadurch charakterisiert, dass ein Schneckengewinde mit Durchbrüchen bzw. Nuten ausgestattet wird, die den Materialtransport unterbrechen und für eine verbesserte Durchmischung sorgen. Die Oberflächen in den Durchbrüchen bzw. Nuten werden jedoch nicht kinematisch gereinigt, so dass an diesen Stellen Material anhaften, degradieren und zu einer Quelle der Kontamination für das Extrudat - also hier die zu extrudierende plastische oder viskoelastische Masse - werden kann.

Es sind jedoch auch Mischelemente mit vollständiger Selbstreinigung seit langem bekannt. So wurden bereits in der DE 940 109 C dreigängige Knetscheiben offenbart, die eine verbesserte Mischwirkung gegenüber kontinuierlich fortlaufenden Schneckengängen lieferten.

In der DE 3 412 258 A1 wird gelehrt, wie Spalte zwischen den Schneckenkämmen und der Gehäuseinnenwand für drei- und viergängige Schneckenelemente für Doppelschneckenextruder gestaltet werden können. Durch einen unterschiedlichen Spalt an den Schneckenkämmen wird das Extrudat gezielt geschert. Dazu wird eine symmetrische Anordnung von drei- oder viergängigen Schneckenprofilen einer Doppelschnecke, die a priori an allen Schneckenkämmen denselben Spalt S (dort s genannt) zur Gehäuseinnenwand aufweisen, mit einer Exzentrizität $e$, die kleiner ist als s aus den Drehzentren parallel verschoben.

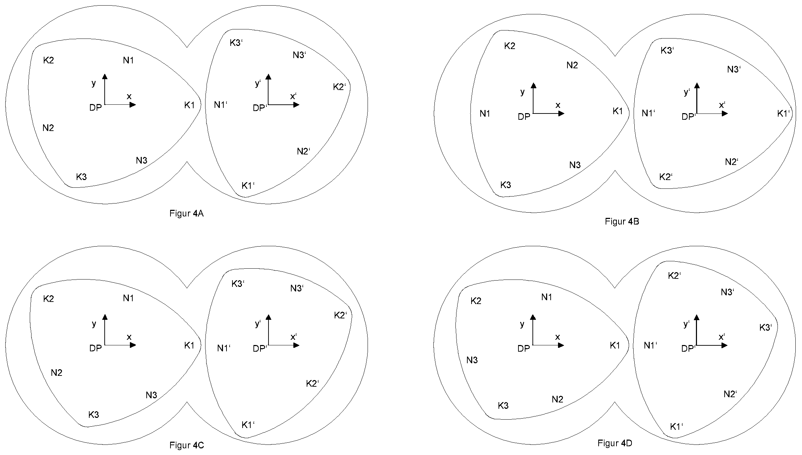

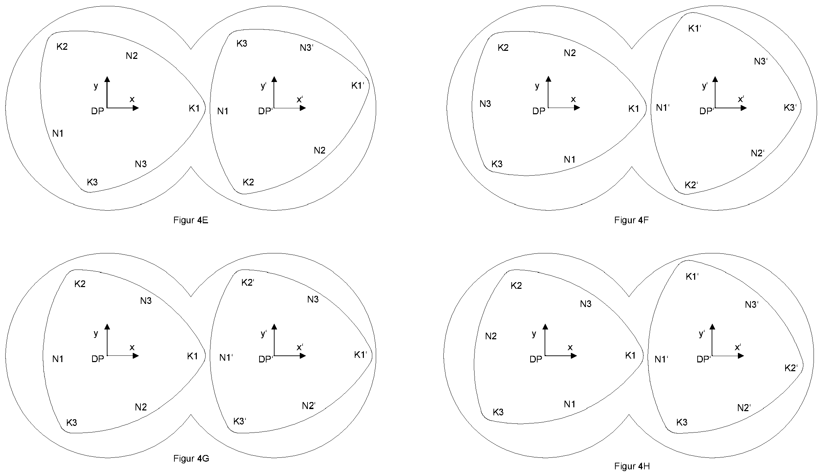

EP 2 131 A1 offenbart eine Methode, um paarweise selbstreinigende Schneckenelemente herzustellen, wobei die einzelnen Schneckenkämme dieser Schneckenelemente einen unterschiedlichen Spalt zur Gehäuseinnenwand aufweisen. Die Spaltweite eines einzelnen Schneckenkamms kann dabei bis zur halben Gangtiefe $H$ vergrößert werden. Ziel ist auch hier, einen Materialaustausch zwischen den einzelnen Schneckengängen herzustellen und das Material bei der Passage über den Schneckenkamm gezielt zu scheren. Die erhaltenen zweigängigen Schneckenelemente weisen keine Symmetrieachsen auf und unterschiedliche Kammwinkel an den beiden Schneckenkämmen. Beansprucht werden auch drei- und viergängige Schneckenelemente. Bei den dreigängigen Schneckenelementen wird an einem Schneckenspiel der Spalt vergrößert (Figur 4). Unter der Gangtiefe $H$ wird dabei die Hälfte der Strecke, die die Differenz zwischen dem Außendurchmesser da des Schneckenelements und dem Kerndurchmesser di des Schneckenelements ist, verstanden, also $H = (DA - DA) / 2$. Über Vermeidung einer Schädigung von Extrudat und verbesserten Wärmeübergang lehrt diese Anmeldung nichts.

DE 42 39 220 A1 beschreibt dreigängige Schneckenelemente, die an den drei Kämmen unterschiedliche Spalte und unterschiedliche Kammwinkel aufweisen, wobei der Schneckenkamm mit dem geringsten Spalt zur Gehäuseinnenwand den größten Kammwinkel aufweist. Dies erlaubt die Konstruktion von dreigängigen Schneckenprofilen mit einem Verhältnis von Außendurchmesser da zu Kerndurchmesser di von größer als 1,366. Die nach diesem Konstruktionsprinzip ausgeführten Schneckenelemente sind jedoch nachteilig, weil an dem Schneckenkamm mit dem engsten Spalt und gleichzeitig dem größten Kammwinkel eine Zone hoher Scherbelastung für das zu verarbeitende Polymer vorliegt, in der es durch die hohe Scher- und Temperaturbelastung leicht zu einer Schädigung kommen kann.

WO 02 09 919 A2 beschreibt unter anderem dreigängige und viergängige Schneckenelemente, wobei die Kammwinkel an jedem Schneckenkamm eines drei- oder viergängigen Schneckenelementes unterschiedlich ausgeführt werden können. WO 02 09 919 A2 lehrt jedoch nicht, welche Ausführungsformen hinsichtlich ihrer Misch- und Dispergierwirkung oder ihres Verhaltens beim Druckaufbau günstig sind. Die Konstruktionsvorschrift dieser Elemente ist auf Übergangselemente (dort als "fractional elements" bezeichnet) zwischen ein- und dreigängigen bzw. zwischen zwei- und viergängigen Elementen beschränkt, was die Freiheiten einschränkt.

EP 1 093 905 A2 beschreibt Schneckenprofile für dreigängige, paarweise selbstreinigende Schneckenelemente für Doppelschneckenextruder mit hoher distributiver und dispersiver Mischwirkung. Die dort beschriebenen Schneckenelemente haben jedoch den Nachteil, dass sie an der Stelle mit dem engsten Spalt zur Gehäuseinnenwand einen breiten Kammwinkel aufweisen, was dazu führt, dass eine Zone mit hoher Energiedissipation und einer hohen lokalen Temperaturspitze entsteht, was bei empfindlichen Polymeren zu einer Schädigung führen kann.

Der Erfindung lag die Aufgabe zugrunde, ein Schneckenelement zur Verfügung zu stellen, mit dem eine gegenüber dem Stand der Technik verbesserte Misch- und Dispergierwirkung bei gleichzeitig gutem Wärmeübergang realisiert werden kann.

Auch soll das erfindungsgemäße Paar dreigängiger Schneckenelemente dem Extrudat in der Gehäusebohrung mehr Volumen als herkömmliche dreigängige Schneckenelemente zur Verfügung stellen.

Darüber hinaus sollen sich die beiden Schneckenelemente des erfindungsgemäßen Paares Schneckenelemente bei bestimmungsgemäßer Nutzung gegenseitig praktisch abschaben.

Überraschend wurde nun gefunden, dass die Aufgabe gelöst wird durch ein Paar Schneckenelemente mit den Merkmalen des Hauptanspruchs.

Im Rahmen der vorliegenden Erfindung gilt für die nachfolgend genannten Begriffe:

Ein **Schneckenprofil** ist eine geschlossene konvexe Kurve. Dabei setzt sich ein Schneckenprofil aus mehreren voneinander verschiedenen Kurvenzügen zusammen, die - je nach ihren geometrischen Eigenschaften - als "Kamm", als "Flanke" oder als "Nut" bezeichnet werden. Ein Kamm grenzt immer zu beiden Seiten an eine Flanke an. Eine Nut grenzt immer zu beiden Seiten an eine Flanke an. Dabei treten Kämme und Nuten jeweils durch eine Flanke voneinander getrennt in einem Schneckenprofil in demselben Richtungssinn folgend immer abwechselnd auf. Dadurch entsteht die Abfolge Kamm - Flanke - Nut - Flanke - Kamm - usw.

Ein **Kurvenzug** ist eine ununterbrochene Linie mit einer Länge, jedoch ohne Breite, wobei ein Kurvenzug einen ersten Endpunkt und einen zweiten Endpunkt aufweist, die nicht ein und derselbe Punkt sind; das heißt, der erste Endpunkt fällt nicht mit dem zweiten Endpunkt zusammen.

Ein Kurvenzug kann aus mehreren Kurventeilstücken zusammengesetzt sein, wobei ein erstes Kurventeilstück einen gemeinsamen Berührpunkt mit einem zweiten Kurventeilstück hat, das dem ersten Kurventeilstück unmittelbar benachbart ist.

Ein Kurvenzug kann aber auch aus genau einem Kurventeilstück bestehen.

Ein **Kurventeilstück** ist ein Teilstück eines Kurvenzugs, wobei das Kurventeilstück einen ersten Endpunkt und einen zweiten Endpunkt aufweist, die nicht ein und derselbe Punkt sind; das heißt, der erste Endpunkt fällt nicht mit dem zweiten Endpunkt zusammen.

Die mathematischen Ausdrücke, die einem Kurventeilstück zu Grunde liegen, sind bevorzugt ausgewählt aus der Gruppe der mathematischen Ausdrücke umfassend die folgenden Mitglieder: Kreisbogen, Ellipsenbogen, Parabelbogen, Längsschnittäquidistantenrechenvorschrift gemäß [1],

Seiten 117 bis 121, Kreisäquidistantenrechenvorschrift und Raumäquidistantenrechenvorschrift. Zur Herstellung eines konstanten Spiels bei der gegenseitigen Abreinigung der Schneckenelemente ist die Längsäquidistantenrechenvorschrift oder die Kreisäquidistantenrechenvorschrift bevorzugt.

Dabei gilt für ein Kurventeilstück $\vec{k}$ außerdem, dass es eine Linie ist, die sich in einer Parameterdarstellung ihrer Bogenlänge $l$

$$\vec{k}(l) = \begin{pmatrix} x_{k,l}(l) \\ y_{k,l}(l) \end{pmatrix}$$

darstellen lässt und bei der $x_{k,l}(l)$ und $y_{k,l}(l)$ analytische Funktionen und $x$ und $y$ die Koordinaten der Linie in der Ebene sind, und damit durch unendliche Potenzreihen darstellbar, stetig, beliebig oft differenzierbar und somit knickfrei.

Die Längsäquidistantenrechenvorschrift ist in [1], Seiten 117 bis 121, offenbart.

Die Kreisäquidistantenvorschrift geht von einem exakt abschabenden Schneckenprofil in der x-y - Ebene eines kartesischen Koordinatensystems aus, wobei in jedem Punkt des Schneckenprofils eine Senkrechte in Richtung zum Drehpunkt DP gefällt wird. Der Punkt, der um das halbe Spiel entlang dieser Senkrechte zum Drehunkt hin verschoben ist, gehört dann zum technisch ausgeführten Schneckenprofil. Falls beispielsweise ein Abschnitt eines exakt abschabenden Schneckenprofils ein Kreisbogen mit einem Radius $r_i$ ist, so ergibt sich als zugehöriger Abschnitt des zugehörigen technisch ausgeführten Schneckenprofils ein Kreisbogen mit gleichem Mittelpunkt und dem Radius $r_i - \frac{s}{2}$.

Die Raumäquidistante ist in [1], Seite 41, erwähnt; eine Raumäquidistante ist beispielsweise durch eine Parameterdarstellung erhältlich. In der internationalen Patentanmeldung Anmeldenummer PCT/EP2023/058951 ist die Raumäquidistante ausführlich erklärt.

Eine geschlossene, konvexe **Kurve** ist eine ununterbrochene Linie mit einer von Null verschiedenen Länge, jedoch ohne Breite, zusammengesetzt aus einem oder mehreren Kurvenzügen, die ihrerseits wiederum aus einem oder mehreren Kurventeilstücken zusammengesetzt sind. Sie besitzt keinen ausgezeichneten Anfangs- und Endpunkt. Man kann, ausgehend von jedem Punkt auf der Kurve, die Länge der Kurve bestimmen, indem man einmal um die Kurve herum die Länge der Kurventeilstücke aufaddiert. Jede Tangente an eine geschlossene, konvexe Kurve liegt außerhalb des Bereiches, der von der Kurve umschlossen wird.

Da sich alle Kurventeilstücke eines Schneckenprofils in einer Ebene befinden, teilt eine geschlossene Kurve, die ein Schneckenprofil ist, die Fläche dieser Ebene in einen Bereich innerhalb der geschlossenen Kurve und in einen Bereich außerhalb der geschlossenen Kurve.

Ein **Kreisbogen** ist ein Kurventeilstück, bei dem alle Punkte des Kreisbogens den gleichen Abstand, genannt Radius, von einem gemeinsamen Mittelpunkt haben. Ein Kreisbogen hat einen Anfangs- und einen Endpunkt, die nicht ein und derselbe Punkt sind.

Ein Kreisbogen wird nur dann und genau dann als ein Kreisbogen angesehen, wenn alle Punkte dieses Kreisbogens den gleichen Mittelpunkt und den gleichen Radius aufweisen und die Punkte dieses Kreisbogens ein ununterbrochenes Kurventeilstück bilden; das heißt, zwei unmittelbar benachbarte Kreisbögen, die einen gemeinsamen Berührpunkt haben, werden nur dann als zwei Kreisbögen angesehen, wenn sie einen unterschiedlichen Mittelpunkt oder einen unterschiedlichen Radius aufweisen.

Ein Kreisbogen mit dem **Mittelpunktskoordinaten** $x_m$, $y_m$ und dem Radius $r$ hat, wie allgemein bekannt, die Parameterdarstellung

$$x = x_m + r \cdot \cos\beta$$

$$y = y_m + r \cdot \sin\beta$$

wobei für den Parameter $\beta$ gilt:

$$\beta_a \leq \beta \leq \beta_e$$

wodurch der **Anfangswinkel eines Kreisbogens** $\beta_a$ und der **Endwinkel eines Kreisbogens** $\beta_e$ des definiert sind und

$\beta_e$ < $\beta_a$ + $\pi$ im Bogenmaß gilt. Für einen Punkt mit den Koordinaten *x, y* wird definiert, dass bezüglich eines ausgezeichneten Punktes mit den Koordinaten $x_m$, $y_m$ der Anfangswinkel gleich dem Endwinkel ist, so dass gemäß obigen Gleichungen gilt, dass

$$\beta_a = \beta = \beta_e$$

Ein Kreisbogen hat den **Anfangspunkt** AP mit den Koordinaten mit den Koordinaten $x_a$ und $y_a$

$$x_a = x_m + r \cdot \cos \beta_a$$

$$y_a = y_m + r \cdot \sin \beta_a$$

Der **Zentriwinkel** eines Kreisbogens (auch verkürzt Winkel eines Kreisbogens genannt) ist

$$\alpha = \beta_e - \beta_a$$

Durch die Angabe der Mittelpunktskoordinaten, der Koordinaten des Anfangspunktes AP und des Zentriwinkels ist ein Kreisbogen vollständig definiert. Der Radius *r* ist dann der Abstand des Mittelpunktes vom Anfangspunkt AP. In den Tabellen weiter unten wird der Radius zur Charakterisierung der Kreisbögen der besseren Übersicht halber zusätzlich angegeben.

Der **Krümmungsradius** ist der Betrag des Kehrwerts der Krümmung des Krümmungskreis in einem gegebenen Punkt eines Kurventeilstückes, wobei der Krümmungskreis zu diesem Punkt der Kreis ist, der die Kurve in diesem Punkt am besten annähert, wie beispielsweise auf Wikipedia beschrieben (https://de.wikipedia.org/wiki/Kr%C3%BCmmungskreis, abgerufen 2023-05-04).

Der **Drehpunkt** DP eines **Schneckenprofils** ist der Schnittpunkt der Drehachse eines Schneckenelements mit der Querschnittsebene rechtwinklig zu dieser Drehachse X. Der Drehpunkt des Schneckenprofils, nachfolgend kurz auch Drehpunkt genannt, fällt auch mit dem Bohrungsmittelpunkt der Gehäusebohrung, in der sich das jeweilige Schneckenelement befindet oder für die das jeweilige Schneckenelement ausgelegt ist, zusammen.

Bezogen auf ein Schneckenprofil ist ein Drehpunkt der Punkt, um den ein Schneckenprofil als Querschnittsabbildung eines Schneckenelements rotiert.

Der **Außenradius** RA eines Schneckenprofils ist der maximale Abstand des Schneckenprofils vom Drehpunkt; also ist der Außenradius RA der Radius des Kreises, der das gesamte Schneckenprofil einschließt und dessen Mittelpunkt der zu diesem Schneckenprofil zugehörige Drehpunkt ist.

Der **Innenradius** RI eines Schneckenprofils ist der minimale Abstand des Schneckenprofils vom Drehpunkt.

Ein **Kamm** ist:

(i) entweder genau ein Kreisbogen eines Schneckenprofils, der den Drehpunkt des Schneckenprofils als Mittelpunkt hat, und bei dem alle Punkte dieses Kreisbogens bis auf die jeweils gemeinsamen Berührpunkte mit den beiden dem Kamm unmittelbar benachbarten Kurventeilstücken einen größeren Abstand vom Drehpunkt haben, als die beiden dem Kamm unmittelbar benachbarten Kurventeilstücke;

(ii) oder ein Punkt eines Schneckenprofils, der einen größeren Abstand vom Drehpunkt hat, als die beiden diesem Punkt unmittelbar benachbarten Punkte; der Punkt, der ein Kamm gemäß dieses Falls (ii) ist, ist also ein lokales Maximum des Schneckenprofils hinsichtlich des Abstands zum Drehpunkt. Bevorzugt ist im Fall (ii) ist der Punkt, der ein Kamm ist, ein Punkt eines Kreisbogens, dessen Radius kleiner ist als der Abstand zwischen diesem Punkt und dem Drehpunkt. Dabei kann im Fall (ii) der Punkt, der ein Kamm ist, der mittlere Punkt eines Kreisbogens sein, dessen Radius kleiner ist als der Abstand zwischen diesem Punkt und dem Drehpunkt.

Im Fall (ii) gehen die Kurvenzüge, die dem Kamm unmittelbar benachbarten sind, in dem Punkt, der der Kamm ist, tangential ineinander über.

Der **Kammwinkel** ist im Fall (i) der Winkel des Kreisbogens, also die Differenz von End- und Anfangswinkel. Im Fall (ii) ist er Null.

Der **Kammradius** ist im Fall (i) der Abstand des jeweiligen Kamms, der ein Kreisbogen ist, vom Drehpunkt eines Schneckenprofils und im Fall (ii) der Abstand des Punktes, der ein Kamm ist, vom Drehpunkt des Schneckenprofils.

Eine **Nut** ist:

(iii) entweder genau ein Kreisbogen eines Schneckenprofils, der den Drehpunkt des Schneckenprofils als Mittelpunkt hat, und bei dem alle Punkte dieses Kreisbogens bis auf die jeweils gemeinsamen Berührpunkte mit den beiden der Nut unmittelbar benachbarten Kurventeilstücken einen kleineren Abstand vom Drehpunkt haben als die beiden der Nut unmittelbar benachbarten Kurventeilstücke;

(iv) oder ein Punkt eines Schneckenprofils, der einen kleineren Abstand vom Drehpunkt hat, als die beiden diesem Punkt unmittelbar benachbarten Punkte; der Punkt, der ein Kamm gemäß dieses Falls (iv) ist, ist also ein lokales Minimum des Schneckenprofils hinsichtlich des Abstands zum Drehpunkt. Bevorzugt ist im Fall (iv) ist der Punkt, der eine Nut ist, ein Punkt eines Kreisbogens, dessen Radius größer ist als der Abstand zwischen diesem Punkt und dem Drehpunkt. Dabei kann im Fall (ii) ist der Punkt, der eine Nut ist, der mittlere Punkt eines Kreisbogens sein, dessen Radius größer ist als der Abstand zwischen diesem Punkt und dem Drehpunkt. Im Fall (iv) gehen die Kurvenzüge, die der Nut unmittelbar benachbart sind, in dem Punkt, der die Nut ist, tangential ineinander über.

Ein **Nutwinkel** ist im Fall (iii) der Winkel des Kreisbogens, also die Differenz des End- und Anfangswinkels. Im Fall (iv) ist er Null.

Ein **Nutradius** ist im Fall (iii) der Abstand der jeweiligen Nut, die ein Kreisbogen ist, vom Drehpunkt ines Schneckenprofils und im Fall (iv) der Abstand des Punktes, der eine Nut ist, vom Drehpunkt des Schneckenprofils.

Eine **Flanke** ist ein Kurvenzug eines Schneckenprofils, bei dem alle Punkte dieses Kurvenzugs bis auf den gemeinsamen Berührpunkt mit einem ersten der Flanke unmittelbar benachbarten Kurventeilstück einen kleineren Abstand vom Drehpunkt haben als dieses erste der Flanke unmittelbar benachbarte Kurventeilstück und gleichzeitig alle Punkte dieses Kurvenzugs bis auf den gemeinsamen Berührpunkt mit einem zweiten der Flanke unmittelbar benachbarten Kurventeilstück einen größeren Abstand vom Drehpunkt aufweisen als dieses zweite der Flanke unmittelbar benachbarte Kurventeilstück des Schneckenprofils.

Eine Flanke kann aus mehreren Kurventeilstücken zusammengesetzt sein, auf die die vorgenannte Definition zutrifft. Eine Flanke wird dann durch einen konvexen Kurvenzug dargestellt, der sich aus mehreren Kurventeilstücken zusammensetzt, wobei die Krümmungsradien der Kurventeilstücke immer kleiner sind als der Achsabstand $A$.

Erfindungsgemäß bevorzugt wird eine Flanke aus einem konvexen Kurvenzug gebildet, dessen Kurventeilstücke ausschließlich aus Kreisbögen mit Radius kleiner als oder gleich Achsabstand $A$ gebildet sind und erfindungsgemäß besonders bevorzugt wird eine Flanke durch genau einen Kreisbogen mit Radius kleiner als Achsabstand $A$ gebildet. Erfindungsgemäß insbesondere bevorzugt gilt, dass alle Flanken eines Schneckenquerschnittsprofils jeweils durch genau einen Kreisbogen mit Radius kleiner als Achsabstand $A$ gebildet werden.

Zwei Schneckenprofile heißen **gleichsinnig kongruent,** wenn sie durch eine Verschiebung und eine Drehung ineinander übergeführt werden können, Zwei Schneckenprofile heißen **gegensinnig kongruent,** wenn sie durch eine Verschiebung, eine Drehung und eine Spiegelung ineinander überführt werden können. Zwei Schneckenprofile heißen **drehungsfrei kongruent,** wenn sie durch eine Verschiebung ineinander überführt werden können.

Das erfindungsgemäße Schneckenprofil weist genau sechs Flanken auf. Erfindungsgemäß bevorzugt gilt dabei: Für jede der sechs Flanken gilt unabhängig von jeder der anderen fünf Flanken:

eine Flanke ist aus genau einem einzigen Kreisbogen gebildet, wobei dieser Kreisbogen einen Mittelpunkt besitzt, der nicht der Drehpunkt des Schneckenprofils ist,
oder
eine Flanke kann ausschließlich aus mehreren Kreisbögen gebildet sein, wobei für die Mittelpunkte aller dieser Kreisbögen gilt, dass diese Mittelpunkte vom Drehpunkt des Schneckenprofils verschieden sind,
oder
eine Flanke kann aus mindestens einem Kreisbogen und mindestens einem Kurventeilstück gebildet sein, das nicht ein Kreisbogen ist, wobei kein Kreisbogen einen Mittelpunkt besitzt, der der Drehpunkt des Schneckenprofils ist,
oder
eine Flanke kann aus nur einem einzigen Kurventeilstück gebildet sein, das nicht ein Kreisbogen ist,
oder
eine Flanke kann ausschließlich aus mehreren Kurventeilstücken gebildet sein, von denen keines ein Kreisbogen ist.

Alternativ erfindungsgemäß bevorzugt wird eine Flanke aus einem konvexen Kurvenzug gebildet, dessen Kurventeilstücke ausschließlich nach einer Längsschnittäquidistanten-, Kreisäquidistanten- oder Raumäquidistantenrechenvorschrift gebildet sind, und erfindungsgemäß besonders bevorzugt wird eine Flanke durch genau ein ausschließlich nach einer Längsschnittäquidistanten-, Kreisäquidistanten- oder Raumäquidistantenrechenvorschrift gebildetes Kurventeilstück gebildet. Alternativ erfindungsgemäß insbesondere bevorzugt gilt, dass alle Flanken eines Schneckenquerschnittsprofils ausschließlich nach einer Längsschnittäquidistanten-, Kreisäquidistanten- oder Raumäquidistantenrechenvorschrift gebildet werden, und erfindungsgemäß ganz besonders bevorzugt werden alle Flanken eines Schneckenquerschnittsprofils jeweils durch genau ein ausschließlich nach der Längsschnittäquidistanten-, Kreisäquidistanten- oder Raumäquidistantenrechenvorschrift gebildetes Kurventeilstücke gebildet. Alternativ ganz insbesondere bevorzugt sind alle Kurvenzüge eines Schneckenprofils nach derselben Längsschnittäquidistanten-, Kreisäquidistanten- oder Raumäquidistantenrechenvorschrift gebildet.

Im Sinne der vorliegenden Erfindung wird ein Schneckenelement als dreigängig bezeichnet, wenn es genau drei Kämme aufweist.

Insbesondere wird die Aufgabe gelöst durch ein Paar dreigängige Schneckenelemente, wobei das Paar Schneckenelemente aus dem Schneckenelement SE und dem Schneckenelement SE' besteht,

und

wobei das Paar Schneckenelemente SE und Schneckenelement SE' geeignet ist für eine mehrwellige Schneckenmaschine

mit m gleichsinnig und gleichschnell drehenden Schneckenwellen SW1 bis SWm, deren jeweils benachbarte Drehachsen X1 bis Xm in einem Querschnitt rechtwinklig zu den Drehachsen einen Achsabstand $A$ besitzen und

mit m einander durchdringenden, kreisförmigen Gehäusebohrungen, die jeweils einen identischen Gehäuseinnenradius $R$ aufweisen und deren Bohrungsmittelpunkte M1 bis Mm einen Abstand besitzen, der gleich dem Achsabstand $A$ ist, und deren Bohrungsmittelpunkte M1 bis Mm mit den jeweilig zugehörigen Drehachsen X1 bis Xm der Schneckenwellen SW1 bis SWm zusammenfallen,

wobei das Schneckenelement SE ein Schneckenprofil SP aufweist und das Schneckenelement SE'ein Schneckenprofil SP' aufweist, wobei gilt, dass

(1) jedes der beiden Schneckenprofile SP und SP' eine geschlossene konvexe Kurve ist,
wobei diese geschlossene konvexe Kurve nur aus Kurventeilstücken zusammengesetzt ist, deren Krümmungsradien kleiner oder gleich dem Achsabstand $A$ sind,

(2) entweder keines der beiden Schneckenprofile SP und SP' Spiegelsymmetrie aufweist, wobei im Rahmen der vorliegenden Erfindung ein Schneckenprofil spiegelsymmetrisch ist, wenn es durch die senkrechte Achsenspiegelung an einer beliebigen durch den jeweiligen Drehpunkt verlaufenden Achse auf sich selbst abgebildet wird, oder die Schneckenprofile SP und SP' zueinander nicht kongruent sind,

(3) jedes der beiden Schneckenprofile SP und SP' genau drei Nuten aufweist,

(4) jedes der beiden Schneckenprofile SP und SP' genau drei Kämme - umlaufend mit K1, K2, K3 für das Schneckenprofil SP und K1', K2', K3' für das Schneckenprofil SP' benannt - aufweist,

(6) sich zwei unmittelbar benachbart auf zwei der gleichsinnig und gleichschnell drehenden Schneckenwellen der mehrwelligen Schneckenmaschine paarweise gegenüberliegende Schneckenelemente des Paares Schneckenelemente paarweise praktisch abreinigen,

(7) eine Nut vom nächstliegenden Punkt eines benachbarten Kamms durch eine Flanke getrennt ist,

(8) es genau sechs Kurvenzüge aufweist, die Flanken sind,
wobei insbesondere gilt, dass

(9) $r(Ki)$ der Kammradius des Kammes Ki ist und $r(Ki')$ der Kammradius des Kammes Ki' ist, wobei gilt:

$r(K1) > r(K2)$ und $r(K1) > r(K3)$ und $r(K1') > r(K2')$ und $r(K1') > r(K3')$ und $r(K2) \geq r(K3)$ und $r(K2') \geq r(K3')$ und mindestens eine der Bedingungen a) oder b), wobei

a) $r(K2) > (K3)$ und $r(K2') > r(K3')$
b) $r(K2)$ ungleich $r(K2')$ und $r(K3)$ ungleich $r(K3')$

wobei r(K1) der Kammradius des Schneckenkamms K1 ist und r(K2) der Kammradius des Schneckenkamms K2 ist und r(K3) der Kammradius des Schneckenkamms K3 ist und r(K1') der Kammradius des Schneckenkamms K1' ist und r(K2') der Kammradius des Schneckenkamms K2' ist und r(K3') der Kammradius des Schneckenkamms K3'ist,

(10) der Schneckenkamm K1den Kammwinkel $KW1$, der Schneckenkamm K2 den Kammwinkel $KW2$, der Schneckenkamm K3 den Kammwinkel $KW3$ und der Schneckenkamm K1' den Kammwinkel $KW1'$, der Schneckenkamm K2 den Kammwinkel *KW2'* und der Schneckenkamm K3 den Kammwinkel *KW3'* aufweisen, wobei gilt

(10.1) (10.1.a)wenn $KW1 > 0$, dann $KW1 < KW2$ und $KW1 < KW3$,
und

(10.1.b)wenn $KW1' > 0$, dann $KW1' < KW2$ und $KW1 < KW3$,
oder

(10.2) (10.2.a) wenn $KW1 > 0$, dann $KW1 < KW2$ und $KW1 < KW3$,
und

(10.2.c)wenn $KW1' = 0$; dann $KW2 >= 0$ und $KW3 >= 0$,
oder

(10.3) (10.3.b)wenn $KW1' > 0$, dann $KW1' < KW2$ und $KW1 < KW3$,
und

(10.3.d)wenn $KW1 = 0$, dann $KW2 >= 0$ und $KW3 >= 0$,
oder

(10.4) (10.4.d)wenn $KW1 = 0$, dann $KW2 >= 0$ und $KW3 >= 0$,
und

(10.4.c)wenn $KW1' = 0$; dann $KW2 >= 0$ und $KW3 >= 0$,

wobei r(K1) gleich r(K1') gleich dem Außenradius *RA* bzw. *RA'* der Schneckenelemente sind

und *m* eine ganze Zahl größer 1 ist, bevorzugt von 2 bis 16, besonders bevorzugt, 2, 3, 4, 6, 8, 10, 12 und 16,

und *i* die Werte 1, 2 oder 3 annehmen kann,

und der Außenradius *RA* der Radius des Kreises ist, der das gesamte Schneckenprofil einschließt und dessen Mittelpunkt der zu diesem Schneckenprofil zugehörige Drehpunkt ist, wobei der Kamm K1 ein Kreissegment dieses Kreises ist.

Daraus folgt für die erfindungsgemäßen Schneckenprofile:
Die jeweils genau drei Schneckenkämme K1, K2, K3 sowie K1', K2' und K3' (als Ki bzw. Ki' zusammengefasst) der erfindungsgemäßen Schneckenelemente weisen Spalte *S1*, *S2*, *S3* sowie *S1'*, *S2'* und *S3'* zur Gehäuseinnenwand auf, wobei *S1* bzw. *S1'* der Spalt zwischen Schneckenkamm K1 bzw. K1' und der Gehäuseinnenwand ist, *S2* bzw. *S2'* der Spalt zwischen Schneckenkamm K2 bzw. K2' und der Gehäuseinnenwand ist, S3 bzw. S3' der Spalt zwischen Schneckenkamm K3 bzw. K3' und der Gehäuseinnenwand ist, wobei folgende Relationen gelten:
Im Sinne der vorliegenden Erfindung wird unter einem Spalt *S* der Abstand zwischen einem Schneckenkamm und der Gehäuseinnenwand bezeichnet, gehorcht also der Gleichung $S1 = R - r(Ki)$, und $S_i = R - r(Ki)$, also $S1 = R - r(K1)$, $S2 = R - r(K2)$ und $S3 = R - r(K3)$ sowie $Si' = R - r(Ki')$, also $S1' = R - r(K1')$, $S2' = R - r(K2')$ und $S3' = R - r(K3')$.

Bei den Merkmalen unter Ziffer (10) gilt erfindungsgemäß bevorzugt:

(10.1)

(10.1.a)wenn $KW1 > 0$, dann $KW1 < KW2$ und $KW1 < KW3$,
und

(10.1.b)wenn $KW1' > 0$, dann $KW1' < KW2$ und $KW1 < KW3$,

oder

(10.4)

(10.4.c)wenn $KW1 = 0$, dann $KW2 >= 0$ und $KW3 >= 0$,

und

(10.4.d) wenn $KW1'$ = 0; dann $KW2$ >= 0 und $KW3$ >= 0.

Weiterhin gilt für die erfindungsgemäßen Schneckenelemente:
Jeder Kamm Ki bzw. Ki' korrespondiert zu einer Nut Ni' bzw. Ni auf dem korrespondierenden Schneckenelement, also N1' zu K1, N2' zu K2, N3' zu K3, N1 zu K1', N2 zu K2', N3 zu K3'. Hierbei gilt für jedes der beiden erfindungsgemäßen Schneckenelemente SE und SE', dass für den Nutradius $r(Ni')$ die Gleichung gilt: $r(Ni')$ = RI + Si - S1 und entsprechend $r(Ni)$ = RI' + Si' - S1', und dass für den Anfangswinkel des Kamms $i$ und den Anfangswinkel der Nut $i'$ $\beta_{a,Ki} \geq \beta_{\alpha,Ni}' + \pi$ und für den Endwinkel des Kamms $i$ und den Endwinkel der Nut $i'$ $\beta_{e,Ki} \leq \beta_{e,Ni}' + \pi$ und für den Anfangswinkel des Kamms $i'$ und den Anfangswinkel der Nut $i$ gilt, dass $\beta_{a,Ki'} - \pi \geq \beta_{a,Ni}$ und $\beta_{e,Ki'} - \pi \leq \beta_{e,Ni}$. Es gilt stets, dass $KWi \leq NWi'$ und $KWi' \leq NWi$. Mit anderen Worten: ein Kamm Ki des einen Schneckenelements eines Paares erfindungsgemäßer Schneckenelemente und eine Nut Ni' des anderen Schneckenelements dieses Paares erfindungsgemäßer Schneckenelemente liegen - bezogen auf ihr jeweiliges Schneckenelement - auf entgegengesetzten Seiten.

Mit dem erfindungsgemäßen Paar Schneckenelemente wird eine gegenüber dem Stand der Technik verbesserte Misch- und Dispergierwirkung bei gleichzeitig guter Scherung und gutem Wärmeübergang erreicht und es ist gewährleistet, dass zwei erfindungsgemäße Schneckenelemente, die unmittelbar benachbart auf zwei unmittelbar benachbarten Schneckenwellen gegenüberliegen, sich gegenseitig praktisch abreinigen.

Die Energieeinleitung ist auf Grund der größeren Spalte der Kämme K2 und K3 im Vergleich zum Spalt des Kamms K1 beim erfindungsgemäßen Schneckenelement im Vergleich zu herkömmlichen, nach dem Stand der Technik bekannten Schneckenelementen reduziert. Überraschend weist das erfindungsgemäße Paar dreigängiger Schneckenelemente trotzdem eine hervorragende Mischwirkung auf.

In einer erfindungsgemäß bevorzugten Ausführungsform des erfindungsgemäßen dreigängigen Paars Schneckenelemente gilt außerdem für Schneckenprofile mit den unter (1) bis (10) dargestellten Merkmalen, dass:

(11) jeder der drei Kämme K1, K2 und K3 des Schneckenelementes SE jeweils aus nur jeweils einem Kurventeilstück gebildet ist, das ein Kreisbogen ist, dessen Mittelpunkt der den Kämmen K1, K2 und K3 gemeinsame Drehpunkt DP ist und jeder der drei Kämme K1', K2' K3' des Schneckenelementes SE ' ebenso jeweils nur aus jeweils einem Kurventeilstück gebildet ist, dessen Mittelpunkt der der den Kämmen K1', K2' und K3' gemeinsame Drehpunkt DP' ist, und

jede der drei Nuten des Schneckenelements SE aus nur jeweils einem Kurventeilstück gebildet ist, das ein Kreisbogen ist, dessen Mittelpunkt der den drei Nuten gemeinsame Drehpunkt DP des Schneckenelements SE ist, und wobei es genau eine Nut gibt, deren Abstand vom Drehpunkt DP kleiner ist als die Abstände der anderen Nuten vom Drehpunkt DP ist, und dass jede der drei Nuten des Schneckenelements SE' aus nur jeweils einem Kurventeilstück gebildet ist, das ein Kreisbogen ist, dessen Mittelpunkt der den drei Nuten gemeinsame Drehpunkt DP' des Schneckenelements SE' ist.

Für diesen erfindungsgemäß bevorzugten Fall mit dem zusätzlichen Merkmal (11) gilt dabei außerdem, dass der Kernradius $RI$ der Radius der Nut mit dem kleinsten Radius - ausgehend vom Drehpunkt DP des Schneckenprofils - aller Nuten des Schneckenelements $SE$ ist und ebenso der Kernradius $RI'$ der Radius der Nut mit dem kleinsten Radius - ausgehend vom Drehpunkt DP des Schneckenprofils - aller Nuten des Schneckenelements SW' ist, wobei RI bevorzugt gleich $RI'$ ist.

Für diesen erfindungsgemäß bevorzugten Fall mit dem zusätzlichen Merkmal (11) gilt dabei außerdem, dass der Außenradius $RA$ der Radius des Kammes mit dem größten Radius - ausgehend vom Drehpunkt DP des Schneckenprofils - aller Kämme des Schneckenelements $SE$ ist und ebenso der Außenradius $RA'$ der Radius der Kamm mit dem kleinsten Radius - ausgehend vom Drehpunkt DP' des Schneckenprofils - aller Kämme des Schneckenelements SW' ist, wobei $RA$ bevorzugt gleich $RA'$ ist.

Die Kreisbögen, die die genau drei Nuten darstellen, haben in dieser erfindungsgemäß bevorzugten Ausführungsform genauso wie die Kreisbögen, die die genau drei Kämme K1, K2 und K3 darstellen, denselben Mittelpunkt, nämlich den Drehpunkt des einen Elementes. Dieser Drehpunkt DP ist also der gemeinsame Mittelpunkt aller drei Kämme K1, K2 und K3 als auch aller drei Nuten.

Daraus ergibt sich, dass in dieser erfindungsgemäß bevorzugten Ausführungsform ein Schneckenprofil an allen Übergangen von einem Schneckenkamm zu einer Flanke jeweils einen Knick aufweist. Ein **Knick** im Schneckenprofil bedeutet, dass im Schneckenelement an der entsprechenden Stelle eine Kante ausgebildet ist. Mathematisch bedeutet ein Knick, dass ein Kurvenzug an der Stelle des Knicks nicht stetig differenzierbar ist.

In einer erfindungsgemäß bevorzugten Ausführungsform des erfindungsgemäßen Paars dreigängiger Schneckenelemente gilt außerdem für Schneckenprofile mit den unter (1) bis (10) dargestellten Merkmalen oder für Schneckenprofile mit den unter (1) bis (10) dargestellten Merkmalen und mit dem zusätzlichen Merkmal (11), dass:

(12) sowohl beim Schneckenprofil SP der Schneckenkamm mit dem größten Kammradius r(Ki), also der Kamm K1, den kleinsten Kammwinkel der Kämme K1, K2 und K3 aufweist, als auch, dass beim Schneckenprofil SP' der Schneckenkamm mit dem größten Kammradius r(Ki)', also der Kamm K1', den kleinsten Kammwinkel der Kämme K1', K2' und K3' aufweist.

Auf diese Weise wird der Energieeintrag reduziert und die thermische Belastung des Polymers vermindert. Daraus folgt für die beschriebene mehrwellige Schneckenmaschine, dass der Schneckenkamm mit dem engsten Spalt zur Gehäuseinnenwand, also der Kamm K1 mit dem Spalt S1, den kleinsten Kammwinkel aufweist. Entsprechendes gilt für den Kamm K1' und den Spalt S1'.

Erfindungsgemäß ist es auch so, dass zwei erfindungsgemäße Schneckenelemente, die unmittelbar benachbart auf zwei Schneckenwellen der beschriebenen mehrwelligen Schneckenmaschine paarweise gegenüberliegen, sich paarweise praktisch abreinigen; solche zwei erfindungsgemäßen Schneckenelemente werden als ein erfindungsgemäßes Paar Schneckenelemente bezeichnet. Dabei können die Schneckenprofile dieser zwei erfindungsgemäßen Schneckenelemente gleich oder unterschiedlich sein.

Erfindungsgemäß bevorzugt ist es so, dass in einem Querschnitt rechtwinklig zu den Schneckenwellen alle Schneckenelemente einander paarweise praktisch abreinigen. Dies gilt naturgemäß wiederum bis auf die technisch nötigen Spiele. Dabei können die Schneckenprofile dieser erfindungsgemäßen Schneckenelemente gleich oder unterschiedlich sein.

In einer weiteren erfindungsgemäß bevorzugten Ausführungsform des erfindungsgemäßen Paars dreigängiger Schneckenelemente gilt außerdem für Schneckenprofile mit den unter (1) bis (10) dargestellten Merkmalen oder für Schneckenprofile mit den unter (1) bis (11) dargestellten Merkmalen oder für Schneckenprofile mit den unter (1) bis (12) dargestellten Merkmalen, dass:

(13) das sowohl das Schneckenprofil SP an allen der Kämme K1, K2 und K3 stetig differenzierbar ist als auch das Schneckenprofil SP' an allen der der Kämme K1', K2' und K3' stetig differenzierbar ist.

In einer weiteren erfindungsgemäß bevorzugten Ausführungsform des erfindungsgemäßen dreigängigen Paars Schneckenelemente gilt außerdem für Schneckenprofile mit den unter (1) bis (10) dargestellten Merkmalen oder für Schneckenprofile mit den unter (1) bis (11) dargestellten Merkmalen oder für Schneckenprofile mit den unter (1) bis (11) dargestellten Merkmalen und mit dem zusätzlichen Merkmal (13), dass:

(14) jeder der drei Kämme K1, K2 und K3 des Schneckenelements SE jeweils aus genau einem Punkt gebildet sind, also $KW1 = KW2 = KW3 = 0$, und ebenso jeder der drei Kämme K1', K2' und K3' des Schneckenelements SE' jeweils aus genau einem Punkt gebildet sind, also $KW1' = KW2' = KW3' = 0$.

In einer weiteren erfindungsgemäß bevorzugten Ausführungsform des erfindungsgemäßen dreigängigen Paars Schneckenelemente gilt außerdem für Schneckenprofile mit den unter (1) bis (10) dargestellten Merkmalen oder für Schneckenprofile mit den unter (1) bis (11) dargestellten Merkmalen oder für Schneckenprofile mit den unter (1) bis (12) dargestellten Merkmalen oder für Schneckenprofile mit den unter (1) bis (13) dargestellten Merkmalen, dass:

(15) die Kämme K1 und K1' aus genau einem Punkt gebildet sind und die Kämme K2 und K3 jeweils aus genau einem Kreisbogen gebildet sind, dessen jeweiliger Mittelpunkt mit dem Drehpunkt DP zusammenfällt, und die Kämme K2' und K3' jeweils aus genau einem Kreisbogen gebildet sind, dessen jeweiliger Mittelpunkt mit dem Drehpunkt DP' zusammenfällt, die Kämme K2 und K3 und die Kämme K2' und K3' also jeweils einen Kammwinkel größer Null haben.

In einer weiteren erfindungsgemäß bevorzugten Ausführungsform des erfindungsgemäßen dreigängigen Paars Schneckenelemente gilt außerdem für Schneckenprofile mit den unter (1) bis (10) dargestellten Merkmalen oder für Schneckenprofile mit den unter (1) bis (11) dargestellten Merkmalen oder für Schneckenprofile mit den unter (1) bis (12) dargestellten Merkmalen oder für Schneckenprofile mit den unter (1) bis (13) dargestellten Merkmalen, dass:

(16) alle Kämme des Schneckenprofils SP und alle Kämme des Schneckenprofils SP' einen Kammwinkel größer Null haben.

Die Abfolge der Kämme und Nuten kann erfindungsgemäß unterschiedlich ausgeführt werden. Zur Charakterisierung wird, ausgehend von dem Kamm K1 auf der Schneckenwelle SW, die Abfolge der Kämme und Nuten in mathematisch positivem Sinn aufgeführt.

In einer weiteren erfindungsgemäß bevorzugten Ausführungsform des erfindungsgemäßen dreigängigen Paars Schneckenelemente gilt außerdem für die Schneckenprofile mit den unter (1) bis (10) dargestellten Merkmalen oder für Schneckenprofile mit den unter (1) bis (10) dargestellten Merkmalen mit einem zusätzlichen Merkmal der Merkmale (11) bis (16) oder für Schneckenprofile mit den unter (1) bis (10) dargestellten Merkmalen mit mehr als einem zusätzlichen Merkmal der Merkmale (11) bis (16), dass:

(17) bei einem gegebenen Gehäuseinnenradius $R$ in Relation zu einem gegebenen Achsabstand $A$ und einem gegebenen Gehäuseinnendurchmesser $D = 2R$ der Abstand $r(K1)$ des Kamms K1 vom Drehpunkt so gewählt, dass für r(K1) bzw. r(K1') der Bereich gilt:

r(K1) ist kleiner oder gleich $R - 0{,}002\,D$ und

r(K1) ist größer oder gleich R - 0,05 D und

r(K1') ist kleiner oder gleich R - 0,002 D und

r(K1') ist größer oder gleich R - 0,05 D.

In einer weiteren erfindungsgemäß bevorzugten Ausführungsform des erfindungsgemäßen dreigängigen Paars Schneckenelemente gilt außerdem für Schneckenprofile mit den unter (1) bis (10) dargestellten Merkmalen oder für Schneckenprofile mit den unter (1) bis (10) dargestellten Merkmalen mit einem zusätzlichen Merkmal der Merkmale (11) bis (17) oder für Schneckenprofile mit den unter (1) bis (10) dargestellten Merkmalen mit mehr als einem zusätzlichen Merkmal der Merkmale (11) bis (17), dass:
(18) bei einem gegebenen Gehäuseinnenradius R in Relation zu einem gegebenen Achsabstand A und einem gegebenen Gehäuseinnendurchmesser D = 2 R der Abstand r(K1) des Kamms K1 vom Drehpunkt so gewählt, dass für die Kämme K2 bzw. K2'bevorzugt der Bereich gilt:

r(K2) ist kleiner oder gleich r(K1) - 0,002 D und

r(K2) ist größer oder gleich r(K1) - 0,08 D

und r(K2') ist kleiner oder gleich r(K1') - 0,002 D und

r(K2') ist größer oder gleich r(K1') - 0,08 D

wobei zusätzlich gilt, dass r(K2) größer ist als (r(K1) + r(N1))j2 und r(K2') größer ist als (r(K1') + r(N1'))/2.

In einer weiteren erfindungsgemäß bevorzugten Ausführungsform des erfindungsgemäßen dreigängigen Paars Schneckenelemente gilt außerdem für die Schneckenprofile mit den unter (1) bis (10) dargestellten Merkmalen oder für Schneckenprofile mit den unter (1) bis (10) dargestellten Merkmalen mit einem zusätzlichen Merkmal der Merkmale (11) bis (18) oder für Schneckenprofile mit den unter (1) bis (10) dargestellten Merkmalen mit mehr als einem zusätzlichen Merkmal der Merkmale (11) bis (18), dass:
(19) bei einem gegebenen Gehäuseinnenradius R in Relation zu einem gegebenen Achsabstand A und einem gegebenen Gehäuseinnendurchmesser D = 2 R der Abstand r(K1) des Kamms K1 vom Drehpunkt so gewählt, dass für die Kämme K3 bzw. K3'bevorzugt der Bereich gilt:

r(K3) ist größer oder gleich r(K1) - 0,09 D

und r(K3) ist kleiner oder gleich r(K2)

und r(K3) ist größer oder gleich r(K2) - 0,05 D

und r(K3') ist größer oder gleich r(K1') - 0,09 D

und r(K3') ist kleiner oder gleich r(K2')

und r(K3') ist größer oder gleich r(K2') - 0,05 D

sowie (r(K1) + r(N1))/2 und r(K3') größer ist als (r(K3') + r(N1'))/2.

Daraus folgt erfindungsgemäß für eine mehrwellige Schneckenmaschine

mit m gleichsinnig und gleichschnell drehenden Schneckenwellen SW1 bis SWm, deren jeweils benachbarte Drehachsen X1 bis Xm in einem Querschnitt rechtwinklig zu den Drehachsen einen jeweils identischen Achsabstand A besitzen und

mit m einander durchdringenden, kreisförmigen Gehäusebohrungen, die jeweils einen identischen Gehäuseinnenradius R aufweisen und deren Bohrungsmittelpunkte M1 bis Mm einen Abstand besitzen, der gleich dem Achsabstand A ist, und deren Bohrungsmittelpunkte M1 bis Mm mit den jeweiligen Drehachsen X1 bis Xm der Schneckenwellen SW1 bis SWm zusammenfallen,

der Spalt $S1$ in Relation zum Gehäuseinnendurchmesser $D$ bevorzugt von $S1/D = 0{,}002$ *bis* $S1/D = 0{,}05$ beträgt, ebenso der Spalt $S1'$ in Relation zum Gehäuseinnendurchmesser $D$ bevorzugt von $S1'/D = 0{,}002$ bis $S1'/D = 0{,}05$ beträgt,

der Spalt $S2$ in Relation zum Gehäuseinnendurchmesser $D$ bevorzugt von $S2/D = 0{,}004$ *bis* $S2/D = 0{,}082$ beträgt, ebenso der Spalt $S2'$ in Relation zum Gehäuseinnendurchmesser $D$ bevorzugt von $S2'/D = 0{,}004$ bis $S2'/D = 0{,}082$ beträgt,

der Spalt S3 in Relation zum Gehäuseinnendurchmesser D bevorzugt von S3/D = 0,004 bis S3/D = 0,1 beträgt, ebenso der Spalt S3' in Relation zum Gehäusedurchmesser D bevorzugt von S3'/D = 0,004 bis S3'/D = 0,1 beträgt.

In einer weiteren erfindungsgemäß bevorzugten Ausführungsform des erfindungsgemäßen dreigängigen Paars Schneckenelemente gilt außerdem für Schneckenprofile mit den unter (1) bis (10) dargestellten Merkmalen oder für Schneckenprofile mit den unter (1) bis (10) dargestellten Merkmalen mit einem zusätzlichen Merkmal der Merkmale (11) bis (19) oder für Schneckenprofile mit den unter (1) bis (10) dargestellten Merkmalen mit mehr als einem zusätzlichen Merkmal der Merkmale (11) bis (19), dass:
(20) der Kammwinkel KW1 0 Grad < KW1 < 10 Grad und bevorzugt 2 Grad < KW1 < 8 Grad beträgt und der Kammwinkel KW 1 ' 0 Grad < KW 1 ' < 10 Grad und bevorzugt 2 Grad < KW1' < 8 Grad beträgt.
Alternativ erfindungsgemäß bevorzugt beträgt der Kammwinkel KW1 0 Grad, wenn das Schneckenprofil am Kamm stetig differenzierbar ist, also das Schneckenprofil am Kamm keinen Knick aufweist.
In einer weiteren erfindungsgemäß bevorzugten Ausführungsform des erfindungsgemäßen dreigängigen Paars Schneckenelemente gilt außerdem für Schneckenprofile mit den unter (1) bis (10) dargestellten Merkmalen oder für Schneckenprofile mit den unter (1) bis (10) dargestellten Merkmalen mit einem zusätzlichen Merkmal der Merkmale (11) bis (20) oder für Schneckenprofile mit den unter (1) bis (10) dargestellten Merkmalen mit mehr als einem zusätzlichen Merkmal der Merkmale (11) bis (20), dass
(21) die Schneckenprofile SP und SP' der beiden Schneckenelemente SE bzw. SE' eines Paares Schneckenelemente drehungsfrei kongruent sind und sich durch eine Verschiebung von dem Drehpunkt des einen Schneckenprofils zu dem jeweils anderen Schneckenprofil ineinander überführen lassen. Dies führt dazu, dass ausgeführte Schneckenelemente identisch sind. Die Abfolge der Kämme und Nuten des Schneckenprofils SP ist dann K1 N2 K3 N1 K2 N3 oder K1 N3 K2 N1 K3 N2.
In einer weiteren erfindungsgemäß bevorzugten Ausführungsform des erfindungsgemäßen dreigängigen Paars Schneckenelemente gilt außerdem für Schneckenprofile mit den unter (1) bis (10) dargestellten Merkmalen oder für Schneckenprofile mit den unter (1) bis (10) dargestellten Merkmalen mit einem zusätzlichen Merkmal der Merkmale (11) bis (20) oder für Schneckenprofile mit den unter (1) bis (10) dargestellten Merkmalen mit mehr als einem zusätzlichen Merkmal der Merkmale (11) bis (20), dass
(22) die Schneckenprofile SP und SP' der beiden Schneckenelemente SE bzw. SE' eines Paares Schneckenelemente gegensinnig kongruent sind und sich durch die Abfolge der Operationen

- Verschiebung des Schneckenprofils von dem Drehpunkt des einen Schneckenprofils zum Drehpunkt des anderen Schneckenprofils,

- Spiegelung entlang der Linie, die die Drehpunkte miteinander verbindet,

- Drehung eines der Schneckenprofile um einen Winkel ungleich Null

ineinander überführen lassen.

Bevorzugt werden Schneckenelemente, die als Förderelemente ausgeführt sind, nach der Vorschrift der Raumäquidistante ausgeführt und haben Kammwinkel, die alle größer Null sind.
Bevorzugt werden Schneckenelemente, die als Knetscheiben ausgeführt sind, nach der Vorschrift der Kreisäquidistanten ausgeführt, und die Profile bestehen lediglich aus Kreisbögen. In einer besonders bevorzugten Ausführungsform solcher Schneckenelemente sind die Schneckenprofile aus Kreisbögen mit zwei verschiedenen Radien zusammengesetzt, und alle Kammwinkel sind 0.
Gegenstand der vorliegenden Erfindung ist ferner die Verwendung eines Paares der erfindungsgemäßen Schneckenelemente in einer mehrwelligen Schneckenmaschine. Bevorzugt wird das Paar der erfindungsgemäßen Schneckenelemente in einer zweiwelligen Schneckenmaschine eingesetzt, also in einem Doppelschneckenextruder.
Gegenstand der vorliegenden Erfindung ist somit auch eine mit einem Paar der erfindungsgemäßen Schneckenelemente ausgerüstete mehrwellige Schneckenmaschine. Die mehrwellige Schneckenmaschine ist dabei mit bevorzugt mit mindestens so vielen Schneckenelementen ausgerüstet, wie die Schneckenmaschine Wellen aufweist. Die erfindungsgemäßen Schneckenelemente sind dabei so auf den Schneckenwellen angeordnet, dass sich jedes der erfindungsgemäßen Schneckenelemente mit mindestens einem anderen der erfindungsgemäßen Schneckenelemente praktisch abreinigt.

Das erfindungsgemäße Paar Schneckenelemente kann in einer mehrwelligen Schneckenmaschine in Form von Knet-, Förder- oder Mischelementen vorliegen. Es ist möglich, Knet-, Förder-, und Mischelemente in einer Schneckenmaschine miteinander zu kombinieren. Das erfindungsgemäße Paar Schneckenelement kann auch mit anderen Schneckenelementen, die z.B. nach dem Stand der Technik bekannt sind, kombiniert werden.

Ein Förderelement zeichnet sich bekanntlich dadurch aus (siehe zum Beispiel [1], Seiten 136 - 142), dass ein Schneckenprofil in Achsrichtung kontinuierlich schraubenförmig verdreht und fortgesetzt wird. Dabei kann das Förderelement rechts- oder linksgängig sein. Die Steigung eines erfindungsgemäßen Förderelements liegt bevorzugt im Bereich des 0,5-fachen bis 5-fachen des Achsabstands A und die axiale Länge eines erfindungsgemäßen Förderelements liegt bevorzugt im Bereich des 0,25-fachen bis 2-fachen der Steigung. Die Länge des Förderelements ist dabei besonders bevorzugt gleich der Steigung; damit bildet das Förderelement eine vollständige Drehung des Schneckenprofils ab.

Ein Knetelement zeichnet sich bekanntlich dadurch aus (siehe zum Beispiel [1], Seiten 142 - 145), dass ein Schneckenprofil in Achsrichtung absatzweise achsparallel in Form von Knetscheiben fortgeführt wird. Die Anordnung der Knetscheiben kann wahlweise rechts- oder linksgängig erfolgen, wodurch sich wahlweise eine Förderwirkung oder eine Rückförderung ergibt. Bei einem Versatzwinkel von 45° zwischen zwei axial benachbarten Knetscheiben ergibt sich für dreigängige Schnecken eine neutrale Anordnung ohne Förderwirkung. Die axiale Länge der Knetscheiben liegt bevorzugt im Bereich des 0,05-fachen bis 0,5-fachen des Achsabstands A. Der axiale Abstand zwischen zwei benachbarten Knetscheiben liegt bevorzugt im Bereich des 0,0005-fachen bis 0,02-fachen des Achsabstands A.

Mischelemente werden bekanntlich unter anderem dadurch gebildet (siehe zum Beispiel [1], Seiten 148 -151), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstands A und die axiale Länge der Elemente liegt bevorzugt im Bereich des 0,5-fachen bis 5-fachen des Achsabstands A. Die Durchbrüche sind bevorzugt u- oder v-förmig und sind bevorzugt gegenfördernd oder achsparallel angeordnet.

Die Reihenfolge der Schneckenelemente bestehend aus Förderelementen und / oder Knetelementen und / oder Mischelementen auf einer Schneckenwelle wird auch als Schneckenkonfiguration bezeichnet.

Das erfindungsgemäße Schneckenelement kann auch als Übergangselement ausgestaltet sein, das heißt, dass das Schneckenprofil an einer Stelle der axialen Ausdehnung des Schneckenelementes ein anderes ist als an einer anderen Stelle der axialen Ausdehnung des Schneckenelements, wobei sich diese verschiedenen Schneckenprofile nicht durch Drehung ineinander überführen lassen.

Das erfindungsgemäße Schneckenelement eignet sich zur Extrusion plastischer und viskoelastischer Massen, z.B. Suspensionen, Pasten, Glas, Keramische Massen, Metalle in Form einer Schmelze, Kunststoffe, Kunststoffschmelzen, Polymerlösungen, Elastomer- und Kautschuk-Massen.

Gegenstand der vorliegenden Erfindung ist somit auch eine mit mindestens einem Paar der erfindungsgemäßen Schneckenelemente ausgerüstete mehrwellige Schneckenmaschine.

Gegenstand der vorliegenden Erfindung ist daher auch ein Verfahren zur Extrusion plastischer oder viskoelastischer Massen unter Verwendung eines erfindungsgemäßen Paares Schneckenelemente oder unter Verwendung einer mit einem erfindungsgemäßen Paar Schneckenelemente ausgerüsteten Schneckenmaschine.

Unter einer plastischen Masse wird eine verformbare Masse verstanden. Beispiele für plastische Massen sind Polymerschmelzen, vor allem von Thermoplasten, sowie Elastomere, Mischungen von Polymerschmelzen oder Dispersionen von Polymerschmelzen mit Feststoffen, Flüssigkeiten oder Gasen.

Bevorzugt werden thermoplastische Polymere, auch Thermoplaste genannt, oder Gemische von thermoplastischen Polymeren aus der folgenden Reihe eingesetzt: Polycarbonat, Polyamid, Polyester, insbesondere Polybutylenterephthalat und Polyethylenterephthalat, sowie Polyether, thermoplastisches Polyurethan, Polyacetal, Fluorpolymer, insbesondere Polyvinylidenfluorid, sowie Polyethersulfone, Polyolefin, insbesondere Polyethylen und Polypropylen, sowie Polyimid, Polyacrylat, insbesondere Poly(methyl)methacrylat, sowie Polyphenylenoxid, Polyphenylensulfid, Polyetherketon, Polyaryletherketon, Styrolpolymerisate, insbesondere Polystyrol und Styrolcopolymere, insbesondere Styrolacrylnitrilcopolymer und Acrylnitrilbutadienstyrolblockcopolymere sowie Polyvinylchlorid eingesetzt. Ebenso bevorzugt eingesetzt werden so genannte Blends aus den aufgeführten Kunststoffen, worunter der Fachmann eine Kombination aus zwei oder mehreren Kunststoffen versteht.

Unter viskoelastischen Massen werden solchen Materialien und Mischungen verstanden, die eine zeit-, temperatur- und frequenzabhängige Elastizität aufweisen. Die Viskoelastizität ist durch ein teilweise elastisches, teilweise viskoses Verhalten geprägt. Das Material relaxiert nach Entfernen der externen Kraft nur unvollständig, die verbleibende Energie wird in Form von Fließvorgängen (Retardation) abgebaut.

Beispiele für viskoelastische Materialien sind Styrol-Butadien-Kautschuk, Naturkautschuk, Butatdien-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyethylen-Kautschuk. Eine Kombination von zwei oder mehreren der aufgeführten Kautschuke, oder eine Kombination aus einem oder mehreren Kautschuk mit einem oder mehreren Kunststoffen ist natürlich auch möglich.

Die zu extrudierenden plastischen oder viskoelastischen Massen können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden.

Additive können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Weichmacher, Farbmittel, Pigmente, Verarbeitungshilfsmittel, Füllstoffe, Antioxidantien, Verstärkungsstoffe, UV-Absorber und Lichtstabilisatoren, Extenderöle, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren sein. Beispielhaft für Füll- und Verstärkungsstoffe sind Ruß, Glasfaser, Ton, Glimmer, Graphitfaser, Titandioxid, Kohlenstofffasern, Kohlenstoffnanoröhrchen, ionische Flüssigkeiten und Naturfasern.

Das erfindungsgemäße Paar Schneckenelemente eignen sich wie oben ausgeführt besonders zur Extrusion viskoelastischer Massen. Die Verfahrensschritte, die mit Hilfe dieses Paares Schneckenelemente durchgeführt werden können, sind beispielsweise das Einmischen oder Dispergieren von Feststoffen oder Flüssigkeiten oder Gasen. Feststoffe können beispielsweise die oben genannten festen Additive sein. Flüssigkeiten können beispielsweise die oben genannten Additive in flüssiger Form sein, aber auch beispielsweise Wasser. Gase können beispielsweise Stickstoff oder Kohlendioxid sein.

Insbesondere auch kann ein erfindungsgemäßes Paar Schneckenelemente oder eine mit mindestens einem erfindungsgemäßen Paar Schneckenelemente ausgerüstete ein- oder mehrwellige Schneckenmaschine vorteilhaft zur Compoundierung von Thermoplasten, insbesondere von Polycarbonaten oder thermoplastischen Polyurethanen, mit Farbmitteln, Pigmenten- oder Zuschlagstoffen eingesetzt werden.

Gegenstand der vorliegenden Erfindung ist somit sowohl ein Verfahren zur Compoundierung von Thermoplasten, insbesondere von Polycarbonaten oder thermoplastischen Polyurethanen, mit Farb- und Zuschlagstoffen unter Verwendung eines erfindungsgemäßen Paares der Schneckenelemente als auch die Verwendung eines erfindungsgemäßen Paares Schneckenelemente zur Compoundierung von Thermoplasten, insbesondere von Polycarbonaten oder thermoplastischen Polyurethanen, mit Farb- und Zuschlagstoffen.

Nachfolgend wird die Erfindung unter Bezugnahme auf die anliegenden Figuren anhand bevorzugter Ausführungsbeispiele exemplarisch erläutert, wobei die nachfolgend dargestellten Merkmale sowohl jeweils einzeln als auch in Kombination einen Aspekt der Erfindung darstellen können.

Es sei angemerkt, dass im Sinne der vorliegenden Erfindung ein Drehpunkt DP das Querschnittsprofil einer Drehachse X ist. Einander unmittelbar gegenüberliegende Schneckenelemente eines Doppelschneckenextruders mit den Drehachsen X1 und X2 weisen somit die Drehpunkte DP1 und DP2 auf, nachfolgend auch als DP und DP' bezeichnet.

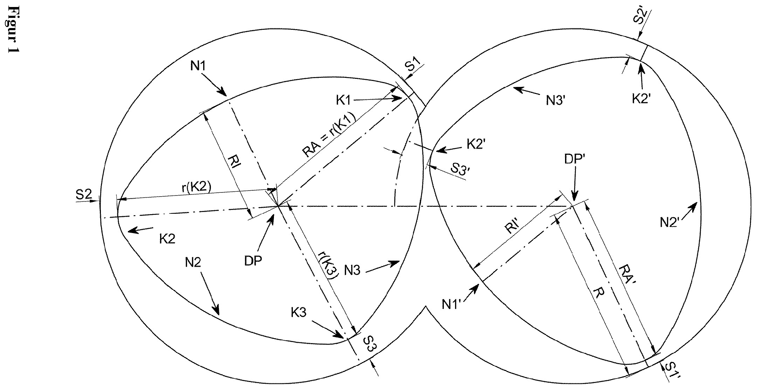

**Figur 1** zeigt ein Paar dreigängiger Schneckenelemente für einen gleichsinnig rotierenden Doppelschneckenextruder im Querschnitt, zeigt also die Schneckenquerschnittsprofile dieser Schneckenelemente. Zur Verdeutlichung der geometrischen Größen sind dabei sind die Werte RI (Innenradius von SP), RA (Außenradius von SP), RI' (Innenradius von SP'), RA' (Außenradius von RA'), die Spalte S1, S2 und S3 sowie S1', S2' und S3' sowie der Drehpunkt DP und der Drehpunkt DP' dargestellt. Weiterhin sind die Kämme K1, K2 und K3 sowie K1', K2' und K3 und Nuten N1, N2 und N3 sowie N1', N2' und N3 dargestellt sowie die Kammradien r(K1), r(K2) und r(K3).

Bei der Figur 1 ist die Abfolge der Kämme und Nuten des linken Schneckenprofils K1 N1 K2 N2 K3 N3.

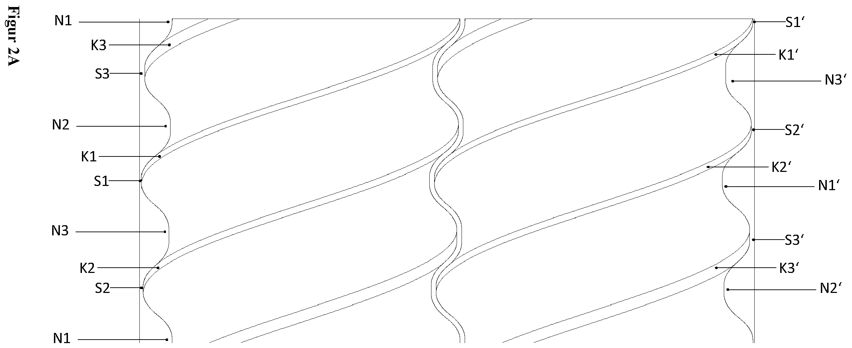

**Figur 2A** zeigt ein erfindungsgemäßes, einander praktisch abschabendes Paar dreigängiger Schneckenelemente für einen gleichsinnig rotierenden Doppelschneckenextruder in der Aufsicht. Die Gehäusewand ist in Figur 2A durch vertikale Linien angedeutet. Bei diesem erfindungsgemäßen Paar Schneckenelemente sind die beiden Schneckenprofile identisch.

Die Schneckenkämme sind mit K1 bis K3 beim linken Schneckenelement und mit K1' bis K3' beim rechten Schneckenelement bezeichnet, entsprechend die Nuten als N1 bis N3 bzw. N1' bis N3'. Der Schneckenkamm K1 reinigt die Gehäuseinnenwand mit dem Spalt S1, der Schneckenkamm K2 mit dem Spalt S2, usw. Das Verhältnis $A/D$ von Achsabstand $A$ zu Gehäuseinnendurchmesser $D$ beträgt 0,91. Das Verhältnis $S1/D$ ist 0.005, das Verhältnis $S2/D$ ist 0,01 und das Verhältnis $S3/D$ ist 0,015. Die Schneckenelemente SE und SE' haben ein identisches Schneckenprofil. Das Verhältnis der Steigung zum Gehäuseinnendurchmesser $T/D$ ist 1. Die Kammwinkel sind, angegeben im Bogenmaß, $KW1 = KW1' = 0,1224$, $KW2 = KW2' = 0,1362$ sowie $KW3 = KW3' = 0,2306$. Die Nutwinkel sind, ebenfalls im Bogenmaß, $NW1 = NW1' = 0,17453$, $NW2 = NW2' = 0.18789$ und $NW3 = NW3' = 0,28184$.

Die Abfolge der Kämme und Nuten für das Schneckenprofil ist K1 N2 K3 N1 K2 N3 bzw. K1' N2' K3' N1' K2' N3'.

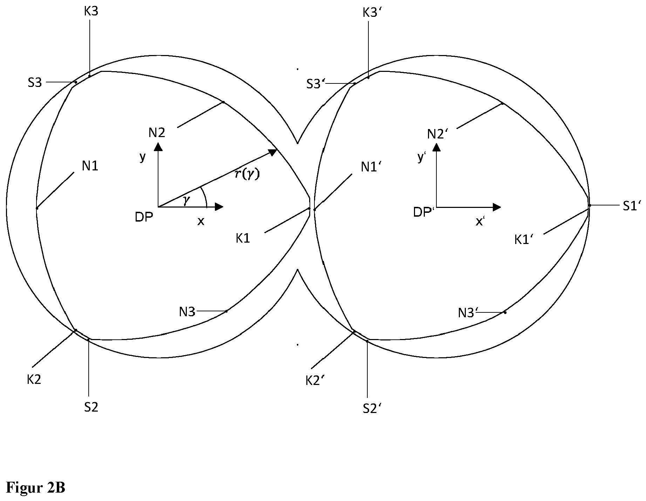

Figur 2B zeigt die Schneckenprofile der Schneckenelemente aus Figur 2A. Die beiden Schneckenprofile lassen sich jeweils durch eine Verschiebung von dem Drehpunkt DP des einen Schneckenelementes zum Drehpunkt DP' des anderen Schneckenelementes ineinander überführen. Die Koordinaten der Schneckenprofile sind in der Tabelle 2B angegeben.

**Tabelle 2B:** Radialkoordinaten $r(\beta)/D$ der einander praktisch abreinigenden Schneckenprofile in Figur 2B abgelesen in 2°-Schritten für $\beta$, zuzüglich der Knicke, bezogen auf den Gehäuseinnennenndurchmesse $D$.

| $\beta$ | $r(\beta)/D$ | $\beta$ | $r(\beta)/D$ | $\beta$ | $r(\beta)/D$ |
|---|---|---|---|---|---|
| 0,000 | 0,49500 | 120,000 | 0,48500 | 243,306 | 0,49000 |
| 2,000 | 0,49500 | 122,000 | 0,48500 | 244,000 | 0,48751 |
| 3,492 | 0,49500 | 124,000 | 0,48500 | 246,000 | 0,48060 |
| 4,000 | 0,49304 | 125,803 | 0,48500 | 248,000 | 0,47406 |
| 6,000 | 0,48556 | 126,000 | 0,48426 | 250,000 | 0,46789 |
| 8,000 | 0,47847 | 128,000 | 0,47696 | 252,000 | 0,46209 |
| 10,000 | 0,47177 | 130,000 | 0,47006 | 254,000 | 0,45663 |
| 12,000 | 0,46544 | 132,000 | 0,46354 | 256,000 | 0,45151 |
| 14,000 | 0,45947 | 134,000 | 0,45739 | 258,000 | 0,44672 |
| 16,000 | 0,45386 | 136,000 | 0,45160 | 260,000 | 0,44226 |
| 18,000 | 0,44860 | 138,000 | 0,44616 | 262,000 | 0,43811 |
| 20,000 | 0,44367 | 140,000 | 0,44106 | 264,000 | 0,43427 |
| 22,000 | 0,43907 | 142,000 | 0,43630 | 266,000 | 0,43074 |
| 24,000 | 0,43480 | 144,000 | 0,43187 | 268,000 | 0,42750 |
| 26,000 | 0,43083 | 146,000 | 0,42775 | 270,000 | 0,42455 |
| 28,000 | 0,42717 | 148,000 | 0,42394 | 272,000 | 0,42189 |
| 30,000 | 0,42381 | 150,000 | 0,42044 | 274,000 | 0,41951 |
| 32,000 | 0,42075 | 152,000 | 0,41723 | 276,000 | 0,41740 |
| 34,000 | 0,41797 | 154,000 | 0,41431 | 278,000 | 0,41556 |
| 36,000 | 0,41547 | 156,000 | 0,41167 | 280,000 | 0,41399 |
| 38,000 | 0,41325 | 158,000 | 0,40931 | 282,000 | 0,41268 |
| 40,000 | 0,41130 | 160,000 | 0,40723 | 284,000 | 0,41163 |
| 42,000 | 0,40961 | 162,000 | 0,40542 | 286,000 | 0,41085 |
| 44,000 | 0,40820 | 164,000 | 0,40387 | 288,000 | 0,41032 |
| 46,000 | 0,40704 | 166,000 | 0,40259 | 290,000 | 0,41004 |
| 48,000 | 0,40615 | 168,000 | 0,40156 | 291,140 | 0,41000 |
| 50,000 | 0,40551 | 170,000 | 0,40080 | 292,000 | 0,41000 |
| 52,000 | 0,40513 | 172,000 | 0,40029 | 294,000 | 0,41000 |
| 53,990 | 0,40500 | 174,000 | 0,40003 | 296,000 | 0,41000 |
| 54,000 | 0,40500 | 176,000 | 0,40000 | 298,000 | 0,41000 |
| 56,000 | 0,40500 | 178,000 | 0,40000 | 300,000 | 0,41000 |
| 58,000 | 0,40500 | 180,000 | 0,40000 | 302,000 | 0,41000 |
| 60,000 | 0,40500 | 182,000 | 0,40000 | 304,000 | 0,41000 |
| 62,000 | 0,40500 | 184,000 | 0,40000 | 306,000 | 0,41000 |
| 64,000 | 0,40500 | 186,000 | 0,40003 | 307,288 | 0,41000 |
| 64,755 | 0,40500 | 188,000 | 0,40029 | 308,000 | 0,41002 |
| 66,000 | 0,40505 | 190,000 | 0,40080 | 310,000 | 0,41024 |
| 68,000 | 0,40534 | 192,000 | 0,40156 | 312,000 | 0,41071 |
| 70,000 | 0,40588 | 194,000 | 0,40259 | 314,000 | 0,41144 |
| 72,000 | 0,40668 | 196,000 | 0,40387 | 316,000 | 0,41243 |
| 74,000 | 0,40774 | 198,000 | 0,40542 | 318,000 | 0,41369 |
| 76,000 | 0,40906 | 200,000 | 0,40723 | 320,000 | 0,41520 |
| 78,000 | 0,41064 | 202,000 | 0,40931 | 322,000 | 0,41698 |
| 80,000 | 0,41249 | 204,000 | 0,41167 | 324,000 | 0,41903 |
| 82,000 | 0,41461 | 206,000 | 0,41431 | 326,000 | 0,42136 |

(fortgesetzt)

| $\beta$ | $r(\beta)/D$ | $\beta$ | $r(\beta)/D$ | $\beta$ | $r(\beta)/D$ |
|---|---|---|---|---|---|
| 84,000 | 0,41700 | 208,000 | 0,41723 | 328,000 | 0,42396 |
| 86,000 | 0,41968 | 210,000 | 0,42044 | 330,000 | 0,42685 |
| 88,000 | 0,42264 | 212,000 | 0,42394 | 332,000 | 0,43002 |
| 90,000 | 0,42589 | 214,000 | 0,42775 | 334,000 | 0,43349 |
| 92,000 | 0,42943 | 216,000 | 0,43187 | 336,000 | 0,43727 |
| 94,000 | 0,43328 | 218,000 | 0,43630 | 338,000 | 0,44134 |
| 96,000 | 0,43744 | 220,000 | 0,44106 | 340,000 | 0,44574 |
| 98,000 | 0,44192 | 222,000 | 0,44616 | 342,000 | 0,45046 |
| 100,000 | 0,44672 | 224,000 | 0,45160 | 344,000 | 0,45550 |
| 102,000 | 0,45186 | 226,000 | 0,45739 | 346,000 | 0,46089 |
| 104,000 | 0,45734 | 228,000 | 0,46354 | 348,000 | 0,46662 |
| 106,000 | 0,46317 | 230,000 | 0,47006 | 350,000 | 0,47271 |
| 108,000 | 0,46936 | 232,000 | 0,47696 | 352,000 | 0,47917 |
| 110,000 | 0,47593 | 234,000 | 0,48426 | 354,000 | 0,48600 |
| 112,000 | 0,48287 | 235,502 | 0,49000 | 356,000 | 0,49322 |
| 112,592 | 0,48500 | 236,000 | 0,49000 | 356,477 | 0,49500 |
| 114,000 | 0,48500 | 238,000 | 0,49000 | 358,000 | 0,49500 |
| 116,000 | 0,48500 | 240,000 | 0,49000 | | |
| 118,000 | 0,48500 | 242,000 | 0,49000 | | |

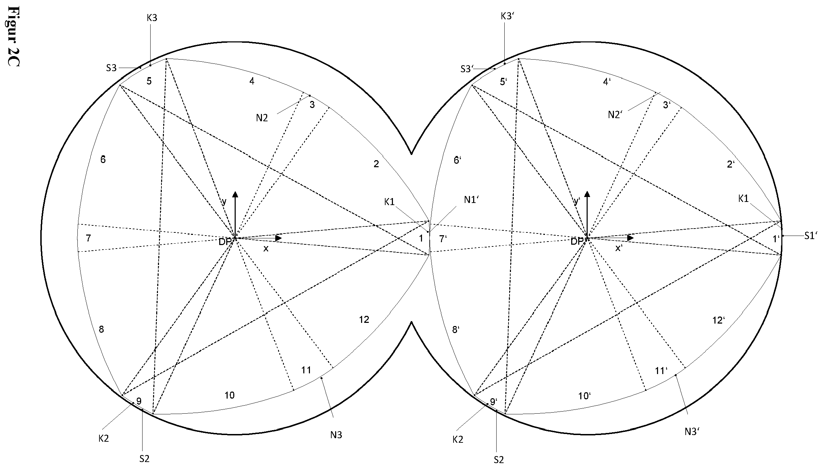

**Figur 2C** zeigt das exakt abschabende Paar dreigängiger Schneckenelemente aus Figur 2A und 2B im Querschnitt, zeigt also die Schneckenquerschnittsprofile dieser Schneckenelemente. Figur 2C zeigt die Schneckenprofile zweier einander exakt abreinigender Schneckenelemente, d.h. es existiert kein Spiel zwischen den Schneckenelementen bei der gegenseitigen Reinigung der Schneckenelemente. In der Praxis wird man hier einen von Null verschiedenes Spiel zwischen den Schneckenelementen einstellen. Die Vorgehensweise dazu ist, wie bereits weiter oben erwähnt, beispielsweise in [1] auf den Seiten 40 und 41 sowie 117 bis 121. dargestellt. Die Kreisbögen, aus denen sich die Schneckenprofile zusammensetzen, sind beim linken Schneckenprofil mit den Ziffern 1 bis 12 bezeichnet und beim rechten Schneckenprofil mit den Ziffern 1' bis 12'. Die Spalte zwischen den Schneckenkämmen und der Gehäuseinnenwand tragen die Bezeichnungen S1 bis S3 beim linken Schneckenelement und S1' bis S3' beim rechten Schneckenelement. Dargestellt sind außerdem als gestrichelte Linien die Konstruktionslinien für die Kreisbögen, aus denen sich die Schneckenprofile zusammensetzen.

Die Schneckenprofile der Schneckenelemente der Figur 2C setzen sich nur aus Kreisbögen zusammen. In der folgenden Tabelle 1B sind für die Schneckenprofile aus der Figur 2C mit den Kreisbögen 1 bis 12 und 1' bis 12' das Verhältnis der Radien $r_i$ zum Achsabstand $A$, die Zentriwinkel, die Koordinaten der Kreismittelpunkte ($x_{m,i}$ und $y_{m,i}$) und die Koordinaten ($x_a$ und $y_a$) der Anfangspunkte AP bezogen auf den Achsabstand $A$ der jeweiligen Kreisbögen aufgeführt. Die Nummerierung der Kreisbögen erfolgt beim erzeugenden Schneckenprofil, hier das linke, gegen den Uhrzeigersinn, und beim erzeugten Schneckenprofil, hier das rechte Schneckenprofil, mit dem Uhrzeigersinn. Alle Längenmaße sind auf den Abstand $A$ zwischen den Drehpunkten DP und DP' normiert. Der Koordinatenursprung befindet sich im Drehpunkt des jeweiligen Schneckenprofils. Die Angaben der Zentriwinkel $\alpha_i$ erfolgen im Bogenmaß. Da die beiden Schneckenprofile identisch sind, wird jeweils nur ein Profil angegeben.

**Tabelle 2C:** Details der Kreisbögen der Schneckenprofile in Figur 2C

| Nr. | $\dfrac{r_i}{A}$ | $\alpha_i$ | $x_a A$ | $y_a/A$ | $x_{m,i}/A$ | $y_{m,i}/A$ |
|---|---|---|---|---|---|---|
| 1, 1' | 0,55220 | 0,17453 | 0,55010 | -0,04813 | 0,00000 | 0,00000 |
| 2, 2' | 1,00000 | 0,42980 | 0,55009 | 0,04813 | -0,32142 | -0,44224 |
| 3, 3' | 0,45330 | 0,18789 | 0,26651 | 0,36668 | 0,00000 | 0,00000 |
| 4, 4' | 1,00000 | 0,40261 | 0,19333 | 0,41000 | -0,23316 | -0,49449 |
| 5, 5' | 0,54121 | 0,28184 | -0,19518 | 0,50479 | 0,00000 | 0,00000 |

(fortgesetzt)

| Nr. | $\frac{r_i}{A}$ | $\alpha_i$ | $x_a A$ | $y_a/A$ | $x_{m,i}/A$ | $y_{m,i}/A$ |
|---|---|---|---|---|---|---|
| 6, 6' | 1,00000 | 0,41192 | -0,32787 | 0,43059 | 0,55010 | -0,04813 |
| 7, 7' | 0,44780 | 0,17453 | -0,44610 | 0,03903 | 0,00000 | 0,00000 |
| 8, 8' | 1,00000 | 0,42524 | -0,44610 | -0,03903 | 0,55010 | 0,04813 |
| 9, 9' | 0,54670 | 0,18789 | -0,32142 | -0,44224 | 0,00000 | 0,00000 |
| 10, 10' | 1,00000 | 0,40694 | -0,23316 | -0,49449 | -0,19518 | 0,50479 |
| 11, 11' | 0,45879 | 0,28184 | 0,16546 | -0,42792 | 0,00000 | 0,00000 |
| 12, 12' | 1,00000 | 0,42081 | 0,27794 | -0,36502 | -0,32787 | 0,43059 |

Die Profile der Figuren 2A und 2B sind die praktisch abreinigenden Schneckenprofile, die bei der Fertigung der Schneckenelemente aus dem Profil aus Figur 2C abgeleitet wurden. Diese Schneckenprofile wurden so berechnet, dass die Schneckenelemente sich räumlich mit einem äquidistanten Spiel gegenseitig abreinigen, also mit der Raumäquidistantenrechenvorschrift berechnet wurden. Alternativ können solche einander praktisch abreinigenden Schneckenprofile auch mit der Längsäquidistantenrechenvorschrift berechnet werden.

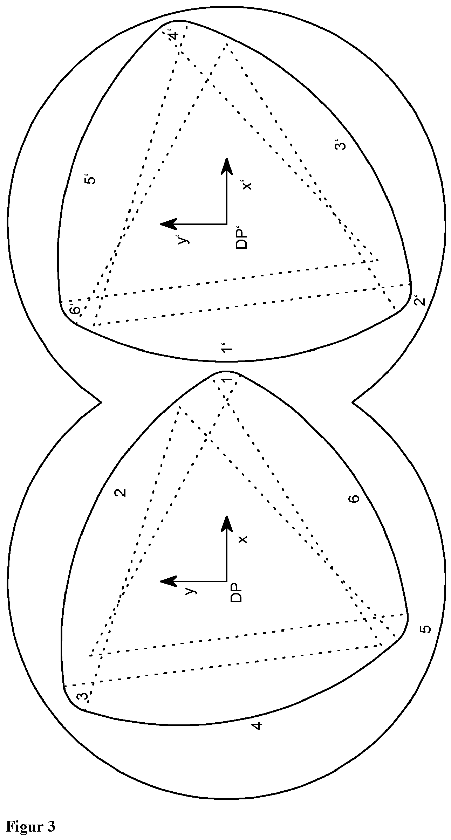

**Figur 3** zeigt die Schneckenprofile eines weiteren Paares erfindungsgemäßer Schneckenelemente. Die Schneckenprofile sind aus Kreisbögen zusammengesetzt. Dargestellt sind außerdem als gestrichelte Linien die Konstruktionslinien für die Kreisbögen, aus denen sich die Schneckenprofile zusammensetzen. Das Schneckenprofil des linken Schneckenelementes SE kann durch die Abfolge der Schritte

- Verschiebung des Schneckenprofils vom Drehpunkt des linken Schneckenprofils DP zum Drehpunkt des rechten Schneckenprofils DP',
- Spiegelung an der Verbindungslinie der beiden Drehpunkte,
- Drehung in mathematisch positiver Richtung um 15°

in das das Schneckenprofil SE' überführt werden. Das Schneckenprofil des linken Schneckenelementes SE und das Schneckenprofil des rechten Schneckenelementes SE' sind also gegensinnig kongruent.

Das Verhältnis des Achsabstandes zum Gehäuseinnendurchmesser beträgt A/D=0,82, das Verhältnis der Spalte S1 und $S1'$ zum Gehäuseinnendurchmesser $S1/D = S1'/D = 0,018$, das Verhältnis des Spaltes $S2$ und $S2'$ zum Gehäuseinnendurchmesser $S2/D = S2'/D = 0,05$ und das Verhältnis der Spalte S3 und S3' zum Gehäuseinnendurchmesser $S3/D = S3'/D = 0,077136$ und das Verhältnis des Spiels zwischen den Schneckenprofilen SW und SW' $s/D = 0,022$. Alle Kammwinkel dieses Schneckenprofils sind KW1=KW2=KW3=KW1'=KW2'=KW3' = 0.

Die Abfolge der Kämme und Nuten auf dem Schneckenelement ist K1 N2 K2 N1 K3 N2.

**Tabelle 3A** enthält die Liste der Kreisbögen des Schneckenprofils SW, relativ zu den Koordinaten x, y relativ zum Drehpunkt DP.

**Tabelle 3A**

| $i$ | $r_i/A$ | $\alpha_i$ | $x_a/A$ | $y_a/A$ | $x_{m,i}/A$ | $y_{m,i}/A$ |
|---|---|---|---|---|---|---|
| 1 | 0,068239 | 1,05238 | 0,473976 | -0,032106 | 0,413761 | 0 |
| 2 | 0,729761 | 1,13916 | 0,471485 | 0,036394 | -0,145823 | -0,352813 |
| 3 | 0,068239 | 1,13916 | -0,241076 | 0,370705 | -0,232169 | 0,30305 |
| 4 | 0,729761 | 1,05238 | -0,297345 | 0,323264 | 0,399663 | 0,107089 |
| 5 | 0,068239 | 0,95005 | -0,133478 | -0,391221 | -0,083624 | -0,344625 |
| 6 | 0,729761 | 0,95005 | -0,074717 | -0,41228 | -0,16997 | 0,311238 |

**Tabelle 3B** zeigt die Liste der Kreisbögen des Schneckenprofils SW', relativ zu den Koordinaten x', y'. relativ zum Drehpunkt DP'.

**Tabelle 3B**

| $i$ | $r_i/A$ | $\alpha_i$ | $x_a/A$ | $y_\alpha/A$ | $x_{m,i}/A$ | $y_{m,i}/A$ |
|---|---|---|---|---|---|---|
| 1' | 0,729761 | 1,05238 | -0,410185 | 0,343344 | 0,413761 | 0 |
| 2' | 0,068239 | 1,13916 | -0,383547 | -0,389207 | -0,145823 | -0,352813 |

(fortgesetzt)

| i | $r_i/A$ | $\alpha_i$ | $x_a/A$ | $y_\alpha/A$ | $x_{m,i}/A$ | $y_{m,i}/A$ |
|---|---|---|---|---|---|---|
| 3' | 0,729761 | 1,13916 | -0,316916 | -0,420468 | -0,232169 | 0,30305 |
| 4' | 0,068239 | 1,05238 | 0,284839 | 0,086875 | 0,399663 | 0,107089 |
| 5' | 0,729761 | 0,95005 | 0,269516 | 0,153685 | -0,083624 | -0,344625 |
| 6' | 0,068239 | 0,95005 | -0,358877 | 0,378893 | -0,16997 | 0,311238 |

**Figuren 4A bis 4H** zeigen verschiedene erfindungsgemäße Schneckenprofile mit unterschiedlichen Abfolgen von Kämmen und Nuten. Für all diese Schneckenprofile beträgt das Verhältnis des Achsabstandes zum Gehäuseinnendurchmesser beträgt $A/D$ = 0,82, das Verhältnis der Spalte $S1$ und $S1'$ zum Gehäuseinnendurchmesser $S1/D$ = $S1'/D$ = 0,018 und das Verhältnis des Spiels zwischen den Schneckenprofilen SW und SW' zum Durchmesser $s/D$ = 0,022. Alle Kammwinkel der erfindungsgemäßen Schneckenelement der Figuren 4A bis 4H sind Null. Das Schneckenprofil der Abbildung 4E entspricht dem des Beispiels 2. Tabelle 4 gibt einen Überblick über die verschiedenen Schneckenprofile, dort sind auch die Kämme und Nuten Ki, Ni, Ki' und Ni' eingezeichnet. Bei der Figur 4B sind Schneckenprofile gezeigt, die nicht kongruent sind und die eine Spiegelsymmetrie zur x-Achse besitzen.

**Tabelle 4: Schneckenprofile der Figuren 4A bis 4H.**

| Figur | S2/D | S3/D | S2'/D | S3'/D | Abfolge Kamm-Nuten | Kongruenz | Symmetrie |
|---|---|---|---|---|---|---|---|
| 4A | 0,05 | 0,05 | 0,077136 | 0,077136 | K1 N1 K2 N2 K3 N3 | keine | keine |
| 4B | 0,05 | 0,05 | 0,077136 | 0,077136 | K1 N2 K2 N1 K3 N3 | keine | Spiegel |
| 4C | 0,05 | 0,077136 | 0,05 | 0,077136 | K1 N1 K2 N2 K3 N3 | keine | keine |
| 4D | 0,05 | 0,077136 | 0,05 | 0,077136 | K1 N1 K2 N3 K3 N2 | gegensinnig | keine |
| 4E | 0,05 | 0,077136 | 0,05 | 0,077136 | K1 N2 K2 N1 K3 N3 | gegensinnig | keine |
| 4F | 0,05 | 0,077136 | 0,05 | 0,077136 | K1 N2 K2 N3 K3 N1 | keine | keine |
| 4G | 0,05 | 0,077136 | 0,05 | 0,077136 | K1 N3 K2 N1 K3 N2 | drehungsfrei | keine |
| 4H | 0,05 | 0,077136 | 0,05 | 0,077136 | K1 N3 K2 N2 K3 N1 | gegensinnig | keine |

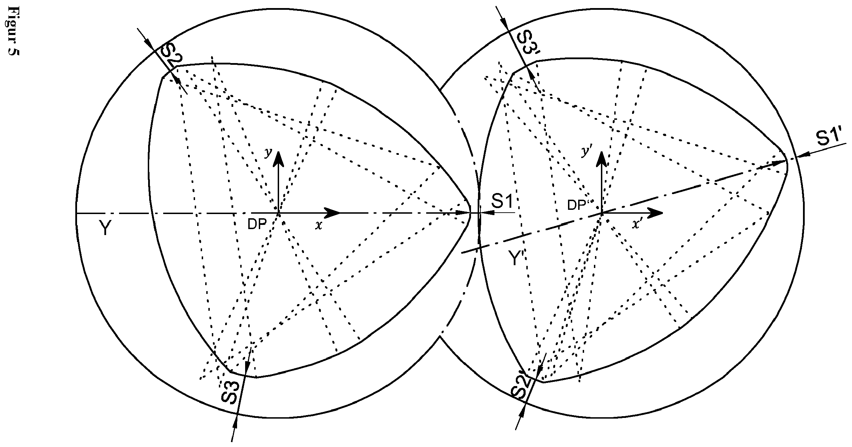

**Figur 5** zeigt die Schneckenprofile eines weiteren Paares erfindungsgemäßer Schneckenelemente. Die Schneckenprofile sind aus Kreisbögen zusammengesetzt. Dargestellt sind außerdem als gestrichelte Linien die Konstruktionslinien für die Kreisbögen, aus denen sich die Schneckenprofile zusammensetzen. Das Schneckenprofil des linken Elementes SW kann durch die Abfolge der Schritte

- Verschiebung des Schneckenprofils vom Drehpunkt des linken Schneckenprofils DP zum Drehpunkt des rechten Schneckenprofils DP',
- Spiegelung an der Verbindungslinie der beiden Drehpunkte (hier mit Y bezeichnet) Drehung in mathematisch positiver Richtung um 15,72025°, wobei die Linie Y in Y' überführt wird

in das Schneckenprofil SW' überführt werden.

Das Verhältnis des Achsabstandes zum Kammwinkel beträgt A/D = 0,8, das Verhältnis der Spalte S1 und S1' zum Gehäuseinnendurchmesser beträgt $S1/D$ = $S1/D$ = 0,025, das Verhältnis der Spalte S2 und S2' zu D beträgt $S2/D$ = $S2'/D$ = 0,062 und das Verhältnis der Spalte S3 und S3' zu D beträgt $S3/D$ = $S3'/D$ = 0,095.

Die Kammwinkel sind, angegeben im Bogenmaß, $KW1$ = $KW1'$ = 0, $KW2$ = $KW2'$ = 0,102871 sowie $KW3$ = $KW3'$ = 0,162301. Die Nutwinkel, ebenfalls im Bogenmaß, sind $NW1$ = $NW1'$ = 0, $NW2$ = $NW2'$ = 0,114586 sowie $NW3$ = $NW3'$ = 0.171879.

Das linke und das rechte Schneckenprofil der Figur 5 ist aus Kreisbögen zusammengesetzt, deren Radien bezogen auf den Gehäuseinnendurchmesser $r_i/D$ bzw. $r_i'/D$, Zentriwinkel, Koordinaten der Anfangspunkte relativ zu den Koordinatenursprung x,y bzw. x',y' bezogen auf den Gehäuseinnendurchmesser $SP_{x,i}/D$ und $SP_{y,i}/D$ bzw. $SP'_{x,i}/D$ und $SP'_{y,i}/D$, Koordinaten des Mittelpunktes des Kreisbogens bezogen auf den Durchmesser $MP_{x,i}/D$ und $MP_{y,i}/D$ in den Tabellen 5A und 5B angegeben.

**Tabelle 5A**

| $i$ | $\alpha_i$ | $\dfrac{r_i}{D}$ | $SP_{x,i}/D$ | $SP_{y,i}/D$ | $x_{m,i}/D$ | $y_{m,i}/D$ |
|---|---|---|---|---|---|---|
| 1 | 0,060252 | 1,083640 | 0,467734 | -0,028684 | 0,414748 | 0,0000 |
| 2 | 0,790000 | 0,538798 | 0,464899 | 0,033394 | -0,192662 | -0,404457 |
| 3 | 0,342000 | 0,114586 | 0,147077 | 0,308759 | 0,0000 | 0,0000 |
| 4 | 0,790000 | 0,464125 | 0,110810 | 0,323551 | -0,145155 | -0,423833 |
| 5 | 0,438000 | 0,102871 | -0,250827 | 0,359068 | 0,0000 | 0,0000 |
| 6 | 0,719748 | 1,076264 | -0,286373 | 0,331413 | 0,399235 | 0,112372 |
| 7 | 0,405000 | 0,162301 | -0,118966 | -0,387133 | 0,0000 | 0,0000 |
| 8 | 0,790000 | 0,267960 | -0,054845 | -0,401269 | -0,164230 | 0,381121 |
| 9 | 0,375000 | 0,171879 | 0,148401 | -0,344387 | 0,0000 | 0,0000 |
| 10 | 0,790000 | 0,495861 | 0,205116 | -0,313931 | -0,226995 | 0,347417 |

**Tabelle 5B**

| $i$ | $\alpha_i$ | $\dfrac{r'_i}{D}$ | $SP_{x'}/D$ | $SP_{y',i}/D$ | $x_{m,i}/D$ | $y_{m,i}/D$ |
|---|---|---|---|---|---|---|
| 1' | 0,719748 | 1,076264 | -0,219406 | 0,340420 | 0,414748 | 0,0000 |
| 2' | 0,438000 | 0,102871 | -0,185869 | -0,396607 | 0,0000 | 0,0000 |
| 3' | 0,790000 | 0,464125 | -0,144159 | -0,413597 | -0,254559 | 0,368651 |
| 4' | 0,342000 | 0,114586 | 0,194328 | -0,281426 | 0,0000 | 0,0000 |
| 5' | 0,790000 | 0,538798 | 0,225231 | -0,257362 | -0,295039 | 0,337129 |
| 6' | 0,060252 | 1,083640 | 0,456558 | 0,093815 | 0,399235 | 0,112372 |
| 7' | 0,790000 | 0,495861 | 0,442467 | 0,154340 | -0,124375 | -0,395924 |
| 8' | 0,375000 | 0,171879 | 0,112387 | 0,357763 | 0,0000 | 0,0000 |
| 9' | 0,790000 | 0,267960 | 0,049541 | 0,371713 | -0,054826 | -0,411363 |
| 10' | 0,405000 | 0,162301 | -0,161514 | 0,371400 | 0,0000 | 0,0000 |

**Patentansprüche**

1.  Paar dreigängiger Schneckenelemente,

    wobei das Paar Schneckenelemente aus dem Schneckenelement SE und dem Schneckenelement SE' besteht, und
    wobei das Paar Schneckenelemente SE und Schneckenelement SE' geeignet ist für eine mehrwellige Schneckenmaschine
    mit m gleichsinnig und gleichschnell drehenden Schneckenwellen SW1 bis SWm, deren jeweils benachbarte Drehachsen X1 bis Xm in einem Querschnitt rechtwinklig zu den Drehachsen einen Achsabstand $A$ besitzen und mit m einander durchdringenden, kreisförmigen Gehäusebohrungen, die jeweils einen identischen Gehäuseinnenradius R aufweisen und deren Bohrungsmittelpunkte M1 bis Mm einen Abstand besitzen, der gleich dem Achsabstand $A$ ist, und deren Bohrungsmittelpunkte M1 bis Mm mit den jeweilig zugehörigen Drehachsen X1 bis Xm der Schneckenwellen SW1 bis SWm zusammenfallen,
    wobei das Schneckenelement SE ein Schneckenprofil SP aufweist und das Schneckenelement SE' ein Schneckenprofil SP' aufweist, wobei gilt, dass

(1) jedes der beiden Schneckenprofile SP und SP' eine geschlossene konvexe Kurve ist, wobei diese geschlossene konvexe Kurve nur aus Kurventeilstücken zusammengesetzt ist, deren Krümmungsradien kleiner oder gleich dem Achsabstand $A$ sind,

(2) entweder keines der beiden Schneckenprofile SP und SP' Spiegelsymmetrie aufweist, oder die Schneckenprofile SP und SP' zueinander nicht kongruent sind,

(3) jedes der beiden Schneckenprofile SP und SP' genau drei Nuten aufweist,

(4) jedes der beiden Schneckenprofile SP und SP' genau drei Kämme - umlaufend mit K1, K2, K3 für das Schneckenprofil SP und K1', K2', K3' für das Schneckenprofil SP' benannt - aufweist,

(6) sich zwei unmittelbar benachbart auf zwei der gleichsinnig und gleichschnell drehenden Schneckenwellen der mehrwelligen Schneckenmaschine paarweise gegenüberliegende Schneckenelemente des Paares Schneckenelemente paarweise praktisch abreinigen,

(7) eine Nut vom nächstliegenden Punkt eines benachbarten Kamms durch eine Flanke getrennt ist,

(8) es genau sechs Kurvenzüge aufweist, die Flanken sind,

**dadurch gekennzeichnet, dass**

(9) $r(Ki)$ der Kammradius des Kammes Ki ist und $r(Ki')$ der Kammradius des Kammes Ki' ist, wobei gilt: $r(K1) > r(K2)$ und $r(K1) > r(K3)$ und $r(K1') > r(K2')$ und $r(K1') > r(K3')$ und $r(K2) \geq r(K3)$ und $r(K2') \geq r(K3')$ und mindestens eine der Bedingungen a) oder b), wobei

a) $r(K2) > (K3)$ und $r(K2') > r(K3')$
b) $r(K2)$ ungleich $r(K2')$ und $r(K3)$ ungleich $r(K3')$

wobei r(K1) der Kammradius des Schneckenkamms K1 ist und r(K2) der Kammradius des Schneckenkamms K2 ist und r(K3) der Kammradius des Schneckenkamms K3 ist und r(K1') der Kammradius des Schneckenkamms K1' ist und r(K2') der Kammradius des Schneckenkamms K2' ist und r(K3') der Kammradius des Schneckenkamms K3'ist,

(10) der Schneckenkamm K1 den Kammwinkel *KW1,* der Schneckenkamm K2 den Kammwinkel *KW2,* der Schneckenkamm K3 den Kammwinkel *KW3* und der Schneckenkamm K1' den Kammwinkel *KW1',* der Schneckenkamm K2 den Kammwinkel *KW2'* und der Schneckenkamm K3 den Kammwinkel *KW3'* aufweisen, wobei gilt

(10.1) (10.1.a) wenn *KW*1 > 0, dann *KW1 < KW2* und *KW*1 < *KW3,* und
(10.1.b) wenn *KW*1' > 0, dann *KW1' <* KW2 und *KW1 < KW3,* oder
(10.2) (10.2.a) wenn *KW1* > 0, dann *KW1 < KW2* und *KW*1 < *KW3,* und
(10.2.c) wenn *KW*1' = 0; dann KW2 >= 0 und *KW3* >= 0, oder
(10.3) (10.3.b) wenn *KW*1' > 0, dann *KW1' <* KW2 und *KW1 < KW3,* und
(10.3.d) wenn *KW1* = 0, dann *KW2* >= 0 und *KW3* >= 0, oder
(10.4) (10.4.d) wenn *KW*1 = 0, dann *KW*2 >= 0 und *KW*3 >= 0, und
(10.4.c) wenn *KW1'* = 0; dann *KW*2 >= 0 und *KW3* >= 0,
wobei r(K1) gleich r(K1') gleich dem Außenradius *RA* bzw. *RA'* der Schneckenelemente sind und *m* eine ganze Zahl größer 1 ist, bevorzugt von 2 bis 16, besonders bevorzugt, 2, 3, 4, 6, 8, 10, 12 und 16,
und *i* die Werte 1, 2 oder 3 annehmen kann,
und der Außenradius *RA* der Radius des Kreises ist, der das gesamte Schneckenprofil einschließt und dessen Mittelpunkt der zu diesem Schneckenprofil zugehörige Drehpunkt ist, wobei der Kamm K1 ein Kreissegment dieses Kreises ist.

2. Paar Schneckenelemente nach Anspruch 1, **dadurch gekennzeichnet, dass** jeder der drei Kämme K1, K2 und K3 des Schneckenelementes SE jeweils aus nur jeweils einem Kurventeilstück gebildet ist, das ein Kreisbogen ist, dessen Mittelpunkt der den Kämmen K1, K2 und K3 gemeinsame Drehpunkt DP ist und jeder der drei Kämme K1',

K2' K3' des Schneckenelementes SE ' ebenso jeweils nur aus jeweils einem Kurventeilstück gebildet ist, dessen Mittelpunkt der der den Kämmen K1', K2' und K3' gemeinsame Drehpunkt DP' ist, und

jede der drei Nuten des Schneckenelements SE aus nur jeweils einem Kurventeilstück gebildet ist, das ein Kreisbogen ist, dessen Mittelpunkt der den drei Nuten gemeinsame Drehpunkt DP des Schneckenelements SE ist, und wobei es genau eine Nut gibt, deren Abstand vom Drehpunkt DP kleiner ist als die Abstände der anderen Nuten vom Drehpunkt DP ist, und dass jede der drei Nuten des Schneckenelements SE' aus nur jeweils einem Kurventeilstück gebildet ist, das ein Kreisbogen ist, dessen Mittelpunkt der den drei Nuten gemeinsame Drehpunkt DP' des Schneckenelements SE' ist.

3. Paar Schneckenelemente nach Anspruch 1 oder 2, **dadurch gekennzeichnet, dass** gilt, dass sowohl beim Schneckenprofil SP der Schneckenkamm mit dem größten Kammradius r(Ki), also der Kamm K1, den kleinsten Kammwinkel der Kämme K1, K2 und K3 aufweist, als auch, dass beim Schneckenprofil SP' der Schneckenkamm mit dem größten Kammradius r(Ki)', also der Kamm K1', den kleinsten Kammwinkel der Kämme K1', K2' und K3' aufweist.

4. Paar Schneckenelemente nach einem der vorhergehenden Ansprüche 1 bis 3, **dadurch gekennzeichnet, dass** das sowohl das Schneckenprofil SP an allen der Kämme K1, K2 und K3 stetig differenzierbar ist als auch das Schneckenprofil SP' an allen der der Kämme K1', K2' und K3' stetig differenzierbar ist.

5. Paar Schneckenelemente nach einem der Ansprüche 1, 2 oder 4, **dadurch gekennzeichnet, dass** jeder der drei Kämme K1, K2 und K3 des Schneckenelements SE jeweils aus genau einem Punkt gebildet sind und ebenso jeder der drei Kämme K1', K2' und K3' des Schneckenelements SE' jeweils aus genau einem Punkt gebildet sind.

6. Paar Schneckenelemente nach einem der Ansprüche 1 bis 4, **dadurch gekennzeichnet, dass** die Kämme K1 und K1'aus genau einem Punkt gebildet sind und die Kämme K2 und K3 jeweils aus genau einem Kreisbogen gebildet sind, dessen jeweiliger Mittelpunkt mit dem Drehpunkt DP zusammenfällt, und die Kämme K2' und K3' jeweils aus genau einem Kreisbogen gebildet sind, dessen jeweiliger Mittelpunkt mit dem Drehpunkt DP' zusammenfällt.

7. Paar Schneckenelemente nach einem der Ansprüche 1 bis 4, **dadurch gekennzeichnet, dass** alle Kämme des Schneckenprofils SP und alle Kämme des Schneckenprofils SP' einen Kammwinkel größer Null haben.

8. Paar Schneckenelemente nach einem der Ansprüche 1 bis 7, **dadurch gekennzeichnet, dass** bei einem gegebenen Gehäuseinnenradius $R$ in Relation zu einem gegebenen Achsabstand $A$ und einem gegebenen Gehäuseinnendurchmesser $D = 2R$ der Abstand $r(K1)$ des Kamms K1 vom Drehpunkt so gewählt, dass für $r(K1)$ bzw. $r(K1')$ der Bereich gilt:

$r(K1)$ ist kleiner oder gleich $R$ - 0,002 $D$ und
$r(K1)$ ist größer oder gleich $R$ - 0,05 $D$ und
$r(K1')$ ist kleiner oder gleich $R$ - 0,002 $D$ und
$r(K1')$ ist größer oder gleich $R$ - 0,05 $D$ ist.

9. Paar Schneckenelemente nach einem der Ansprüche 1 bis 8, **dadurch gekennzeichnet, dass** bei einem gegebenen Gehäuseinnenradius $R$ in Relation zu einem gegebenen Achsabstand $A$ und einem gegebenen Gehäuseinnendurchmesser $D = 2R$ der Abstand $r(K1)$ des Kamms K1 vom Drehpunkt so gewählt, dass für die Kämme K2 bzw. K2' gilt der Bereich gilt:

$r(K2)$ ist kleiner oder gleich $r(K1)$ - 0,002 $D$ und
r(K2) ist größer oder gleich $r(K1)$ - 0,08 $D$
und $r(K2')$ ist kleiner oder gleich $r(K1')$ - 0,002 $D$ und
$r(K2')$ ist größer oder gleich $r(K1')$ - 0,08 $D$,
wobei zusätzlich gilt, dass $r(K2)$ größer ist als $(r(K1) + r(N1))/2$ und r(K2') größer ist als $(r(K1') + r(N1'))/2$.

10. Paar Schneckenelemente nach einem der Ansprüche 1 bis 9, **dadurch gekennzeichnet, dass** bei einem gegebenen Gehäuseinnenradius $R$ in Relation zu einem gegebenen Achsabstand $A$ und einem gegebenen Gehäuseinnendurchmesser $D = 2R$ der Abstand $r(K1)$ des Kamms K1 vom Drehpunkt so gewählt, dass für die Kämme K3 bzw. K3' bevorzugt der Bereich gilt:

r(K3) ist größer oder gleich $r(K1)$ - 0,09 $D$
und $r(K3)$ ist kleiner oder gleich $r(K2)$

und $r(K3)$ ist größer oder gleich $r(K2)$ - 0,05 $D$
und $r(K3')$ ist größer oder gleich $r(K1')$ - 0,09 $D$
und $r(K3')$ ist kleiner oder gleich $r(K2')$
und $r(K3')$ ist größer oder gleich $r(K2')$ - 0,05 $D$
sowie $(r(K1) + r(N1))$j2 und $r(K3')$ größer ist als $(r(K3') + r(N1'))/2$.

11. Paar Schneckenelemente nach einem der Ansprüche 1 bis 10, **dadurch gekennzeichnet, dass** für die Schneckenprofile SP und SP' unabhängig voneinander gilt, dass der Kammwinkel $KW$1 0 Grad < KW1 < 10 Grad und bevorzugt 2 Grad < KW1 < 8 Grad beträgt und der Kammwinkel KW1' 0 Grad < KW1' < 10 Grad und bevorzugt 2 Grad < KW1' < 8 Grad beträgt.

12. Paar Schneckenelemente nach einem der Ansprüche 1 bis 11, **dadurch gekennzeichnet, dass** Schneckenprofile der beiden Schneckenelemente SE und SE' entweder drehungsfrei kongruent sind oder die Schneckenprofile SP und SP' der beiden Schneckenelemente SE bzw. SE' gegensinnig kongruent sind.

13. Verwendung eines Paares Schneckenelemente nach einem der Ansprüche 1 bis 12 in einer mehrwelligen Schneckenmaschine.

14. Mehrwellige Schneckenmaschine ausgerüstet mit einem Paar Schneckenelemente nach einem der Ansprüche 1 bis 12.

15. Verfahren zur Extrusion plastischer oder viskoelastischer Massen unter Verwendung eines Paares Schneckenelemente nach Anspruch 1 oder unter Verwendung einer Schneckenmaschine nach Anspruch 14.

Figur 1

**Figur 2A**

K3

K3'

S3

S3'

N2

N2'

y

y'

N1

$r(\gamma)$

N1'

$r(\gamma)$

DP

$\gamma$

x

DP'

x'

S1'

K1

K1'

N3

N3'

K2

K2'

S2

S2'

**Figur 2B**

Figur 2C

Figur 3

Figur 4A

Figur 4B

Figur 4C

Figur 4D

Figur 4F

Figur 4E

Figur 4H

Figur 4G

Figur 5

Europäisches
Patentamt

European
Patent Office

Office européen
des brevets

# EUROPÄISCHER RECHERCHENBERICHT

**Nummer der Anmeldung**

**EP 23 17 1688**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 107 031 015 A (XU BAIPING) 11. August 2017 (2017-08-11) * Ansprüche 1-10 * * Abbildungen 1-9 * ----- | 1-15 | INV. B29C48/40 B29C48/405 B29C48/25 |
| A | US 2022/126245 A1 (MANNEL BIRGIT [DE] ET AL) 28. April 2022 (2022-04-28) * Ansprüche 1-20 * * Abbildungen 1-20 * ----- | 1-15 | ADD. B29B7/48 |
| A | EP 1 093 905 A2 (DEGUSSA [DE]; DEUTSCHES INST KAUTSCHUK [DE]) 25. April 2001 (2001-04-25) * Ansprüche 1-6 * * Abbildungen 1-4 * ----- | 1-15 | |

**RECHERCHIERTE SACHGEBIETE (IPC)**

B29C
B29B

Der vorliegende Recherchenbericht wurde für alle Patentansprüche erstellt

| Recherchenort | Abschlußdatum der Recherche | Prüfer |
|---|---|---|
| München | 11. Oktober 2023 | Ngwa, Walters |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 17 1688

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2023

| Im Recherchenbericht angeführtes Patentdokument | Datum der Veröffentlichung | Mitglied(er) der Patentfamilie | Datum der Veröffentlichung |
|---|---|---|---|
| CN 107031015 A | 11-08-2017 | KEINE | |
| US 2022126245 A1 | 28-04-2022 | CN 113453866 A | 28-09-2021 |
| | | EP 3930983 A1 | 05-01-2022 |
| | | JP 2022522138 A | 14-04-2022 |
| | | KR 20210131339 A | 02-11-2021 |
| | | US 2022126245 A1 | 28-04-2022 |
| | | WO 2020173729 A1 | 03-09-2020 |
| EP 1093905 A2 | 25-04-2001 | DE 19950917 A1 | 26-04-2001 |
| | | EP 1093905 A2 | 25-04-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 862668 C
- DE 4134026 A1
- DE 19706134 A1
- WO 2004009326 A1
- DE 940109 C
- DE 3412258 A1

- EP 2131 A1
- DE 4239220 A1
- WO 0209919 A2
- EP 1093905 A2
- EP 2023058951 W

**In der Beschreibung aufgeführte Nicht-Patentliteratur**

- **KLEMENS KOHLGRÜBER.** Der gleichläufige Doppelschneckenextruder. Hanser Verlag, 2016, 107-120